(19) Europäisches Patentamt
European Patent Office
Office européen des brevets

(11) EP 3 196 275 B1

(12) **EUROPEAN PATENT SPECIFICATION**

(45) Date of publication and mention of the grant of the patent:
**15.08.2018 Bulletin 2018/33**

(21) Application number: **17152502.5**

(22) Date of filing: **20.01.2017**

(51) Int Cl.:
***C09K 19/54*** *(2006.01)* ***C09K 19/04*** *(2006.01)*
***C09K 19/12*** *(2006.01)* ***C09K 19/20*** *(2006.01)*
***C09K 19/30*** *(2006.01)* ***C09K 19/56*** *(2006.01)*
***B32B 27/28*** *(2006.01)* ***C09D 5/00*** *(2006.01)*
***C08K 5/12*** *(2006.01)* ***C08K 5/315*** *(2006.01)*
***G02B 5/30*** *(2006.01)* ***G02F 1/1337*** *(2006.01)*

(54) **COMPOSITION FOR OPTICAL FILM, OPTICAL FILMS, ANTIREFLECTION FILMS, AND DISPLAY DEVICE**

ZUSAMMENSETZUNG FÜR OPTISCHE FOLIE, OPTISCHE FOLIEN, ANTIREFLEKTIONSFOLIEN UND ANZEIGEVORRICHTUNG

COMPOSITION POUR FILM OPTIQUE, FILMS OPTIQUES, FILMS ANTIREFLETS ET DISPOSITIF D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2016 KR 20160007795**

(43) Date of publication of application:
**26.07.2017 Bulletin 2017/30**

(73) Proprietor: **Samsung Electronics Co., Ltd.**
**Gyeonggi-do 16677 (KR)**

(72) Inventors:
- **LEE, Eun Sung**
  **Gyeonggi-do, (KR)**
- **LEE, Seunghyun**
  **16813, Gyeonggi-do, (KR)**
- **KIM, Changki**
  **Gyeonggi-do, (KR)**
- **CHOI, Hyunseok**
  **14070, Gyeonggi-do, (KR)**

(74) Representative: **Scheuermann, Erik**
**Elkington and Fife LLP**
**Prospect House**
**8 Pembroke Road**
**Sevenoaks, Kent TN13 1XR (GB)**

(56) References cited:
**EP-A1- 1 962 258** **JP-A- H09 165 138**
**US-A1- 2004 209 007** **US-A1- 2015 185 385**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 196 275 B1

## Description

FIELD OF THE INVENTION

A composition for an optical film, the optical film, an antireflective film, and a display device are disclosed.

BACKGROUND OF THE INVENTION

Commonly used flat panel displays may be classified into a self-light-emitting display device and a non-emissive display device requiring a separate light source and an optical film such as a retardation film for improving the image quality thereof.

In the light emitting display device, for example, an organic light emitting display, the visibility and the contrast ratio may be deteriorated by reflection of external light caused by a metal such as an electrode. In order to reduce this undesired effect, a linear polarized light is shifted into a circularly polarized light by using a polarizing plate and an optical film, so that the reflection of the external light by the organic light emitting display and leakage thereof to the outside may be reduced or prevented.

A liquid crystal display (LCD) is a non-emissive display device that uses an optical film thereby securing a wide viewing angle, and thus, may compensate retardation generated by liquid crystals.

There remains a need for an optical film capable of improving display characteristics without causing surface defects.

The document US 2015/185385 A1 (KOBAYASHI TADAHIRO ET AL) 2 July 2015 discloses an optically anisotropic film comprising a polymer of a polymerizable liquid crystal compound and an organic modified polysiloxane. The present optically anisotropic film is usable i.a. as an antireflective film. Further, the present optically anisotropic film is usable in a display device.

The document JP 9- 165318 H (NIPPON UNICAR CORPORATION) 24 June 1997 discloses a purified polyether-modified polysiloxane composition comprising a polyether-modified polysiloxane composition synthesized by a hydrosilylation reaction of a polyoxyalkylene having a carbon-carbon double bond at its end and a hydropolysiloxane. A hydrogenation reaction is carried out on the reaction product. This is used as a component of hair 1 cosmetic.

The document EP 1 962 258 A1 (NITTO DENKO CORP) 27 August 2008 discloses an optical display manufacturing system comprising, as a first step, feeding means that feed a belt and sheet-shaped product comprising at least an optical film as a component of the optical display from a roll of the belt and sheet-shaped product. Examples of the liquid crystal polymer used include various main-chain or side-chain types, the side-chain type liquid crystal polymer may be a polymer comprising a main chain skeleton of polysiloxane , polyacrylate, polymethacrylate, or polymalonate.

The document US 2004/209007 A1 (SATAKE MASAYUKI ET AL) 21 October 2004 discloses an antistatic optical film comprising an antistatic layer laminated on at least one side of an optical film, wherein the antistatic layer comprises a water soluble or a water dispersible conductive polymer. Examples of the liquid crystal polymer used include various main-chain or side-chain types, the side-chain type liquid crystal polymer may be a polymer comprising i.a. a main chain skeleton of 1 polysiloxane.

SUMMARY OF THE INVENTION

An embodiment provides a composition for an optical film capable of improving display characteristics without causing surface defects by reducing reflectance and color shift.

Another embodiment provides an optical film made of the composition, which is capable of improving display characteristics without causing surface defects.

Another embodiment provides an antireflective film including the optical film.

Another embodiment provides a display device including the optical film or the antireflective film.

According to an embodiment, a composition for an optical film includes:

a liquid crystal, and
a polysiloxane including a structural unit represented by Chemical Formula 1A and a structural unit represented by Chemical Formula 1B.

Chemical Formula 1A

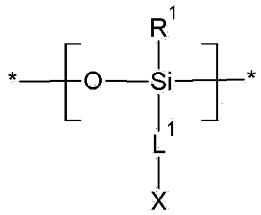

Chemical Formula 1B

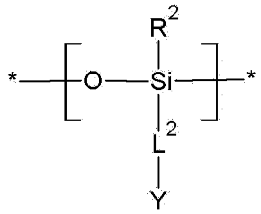

In Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,
$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,
X is selected from a substituted or unsubstituted C6 to C30 aryl group and a substituted or unsubstituted C3 to C30 heteroaryl group, and
Y is selected from a substituted or unsubstituted acryloxy group, a substituted or unsubstituted methacryloxy group, a substituted or unsubstituted acryloyl group, a substituted or unsubstituted methacryloyl group, a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group.

A mole ratio of the structural unit represented by Chemical Formula 1A and the structural unit represented by Chemical Formula 1B may be about 1:9 to about 9:1, for example, about 2:8 to about 5:5.
The polysiloxane may further include a structural unit represented by Chemical Formula 1C.

Chemical Formula 1C

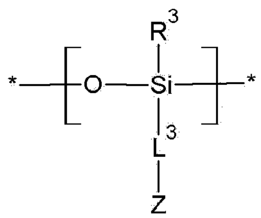

In Chemical Formula 1C,

$R^3$ is selected from hydrogen, a substituted or unsubstituted C1 to C30 alkyl group, a substituted or unsubstituted C6 to C30 aryl group, and a combination thereof,
$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and
Z is a substituted or unsubstituted C1 to C30 alkyl group or a substituted or unsubstituted C1 to C30 alkoxy group.

The structural unit represented by Chemical Formula 1C may be present between the structural unit represented

by Chemical Formula 1A and the structural unit represented by Chemical Formula 1B.

An amount of the polysiloxane may be about 0.001 to about 5 percent by weight% based on the total amount of the composition for an optical film.

The polysiloxane may have a weight average molecular weight of about 1,000 Daltons to about 30,000 Daltons.

The liquid crystal may include at least one of a first liquid crystal represented by Chemical Formula 2A, a second liquid crystal represented by Chemical Formula 2B, and a third liquid crystal represented by Chemical Formula 2C.

Chemical Formula 2A

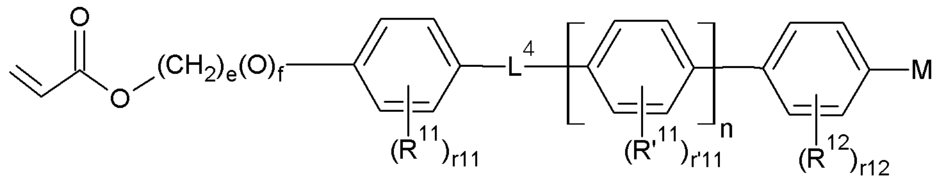

Chemical Formula 2B

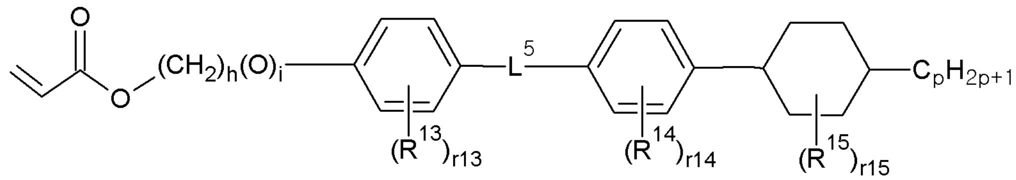

Chemical Formula 2C

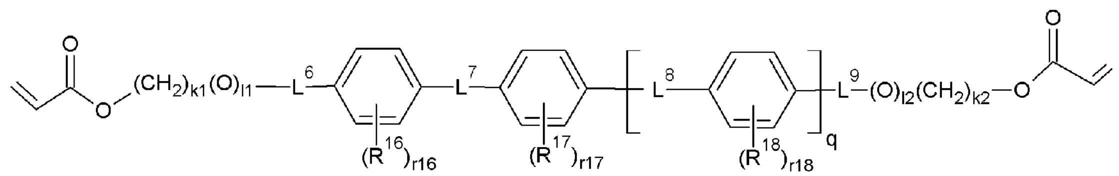

In Chemical Formulae 2A to 2C,

M is selected from a cyano group, a cyano-containing group, a hydroxy group, a substituted or unsubstituted carboxylic acid group, and a combination thereof,
$R^{11}$, $R'^{11}$, and $R^{12}$ to $R^{18}$ are independently selected from a substituted or unsubstituted C1 to C10 alkyl group, a substituted or unsubstituted C1 to C10 alkoxy group, a halogen atom, a halogen-containing group, and a combination thereof,
$r_{11}$, $r'_{11}$, $r_{12}$, $r_{13}$, $r_{14}$, $r_{16}$, $r_{17}$, and $r_{18}$ are independently an integer from 0 to 4,
$r_{15}$ is an integer from 0 to 8,
$L^4$ to $L^9$ are independently selected from a single bond, -C(=O)O-,-OC(=O)-, a C3 to C10 alkylene group, and a C3 to C10 alkylene group further including -C(=O)O- or -OC(=O)-,
e, h, p, $k_1$, and $k_2$ are independently an integer of 1 to 10, and
n, f, i, $l_1$, $l_2$, and q are independently 0 or 1.

The liquid crystal may include the first liquid crystal, the second liquid crystal, and the third liquid crystal, wherein an amount of the first liquid crystal in the liquid crystal is about 10 percent by weight% to about 35 percent by weight based on the total amount of the liquid crystal,
an amount of the second liquid crystal in the liquid crystal is about 10 percent by weight to about 35 percent by weight based on the total amount of the liquid crystal, and
an amount of the third liquid crystal in the liquid crystal is about 30 to about 80 percent by weight based on the total amount of the liquid crystal.

The composition for an optical film may further include a solvent, wherein the composition may include:

about 10 percent by weight to about 30 percent by weight of the liquid crystal,

about 0.001 percent by weight to about 5 percent by weight of the polysiloxane, and
a balance amount of the solvent based on the total amount of the composition for an optical film.

According to another embodiment, an optical film includes a liquid crystal layer including:

a liquid crystal, and
a polysiloxane including a structural unit represented by Chemical Formula 1A and a structural unit represented by Chemical Formula 1B.

Chemical Formula 1A

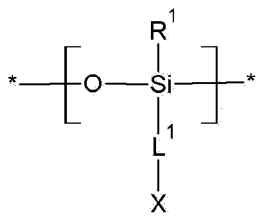

Chemical Formula 1B

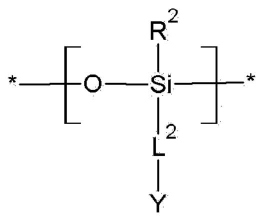

In Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,
$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,
X is selected from a substituted or unsubstituted C6 to C30 aryl group and a substituted or unsubstituted C3 to C30 heteroaryl group, and
Y is selected from a substituted or unsubstituted acryloxy group, a substituted or unsubstituted methacryloxy group, a substituted or unsubstituted acryloyl group, a substituted or unsubstituted methacryloyl group, a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group.

A mole ratio of the structural unit represented by Chemical Formula 1A and the structural unit represented by Chemical Formula 1B may be about 1:9 to about 9:1, for example, about 2:8 to about 5:5.
The polysiloxane may further include a structural unit represented by Chemical Formula 1C.

Chemical Formula 1C

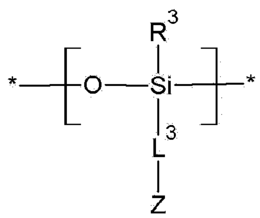

In Chemical Formula 1C,

$R^3$ is selected from hydrogen, a substituted or unsubstituted C1 to C30 alkyl group, a substituted or unsubstituted C6 to C30 aryl group, and a combination thereof,
$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and
Z is a substituted or unsubstituted C1 to C30 alkyl group or a substituted or unsubstituted C1 to C30 alkoxy group.

The structural unit represented by Chemical Formula 1C may be present between the structural unit represented by Chemical Formula 1A and the structural unit represented by Chemical Formula 1B.
The liquid crystal may include at least one of a first liquid crystal represented by Chemical Formula 2A, a second liquid crystal represented by Chemical Formula 2B, and a third liquid crystal represented by Chemical Formula 2C.

Chemical Formula 2A

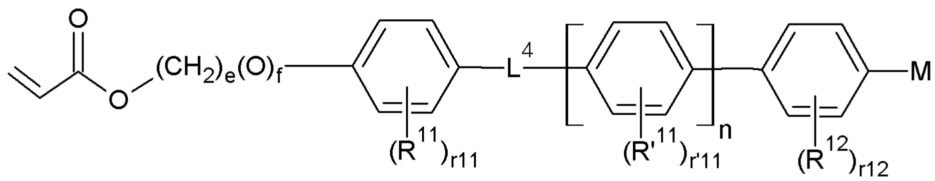

Chemical Formula 2B

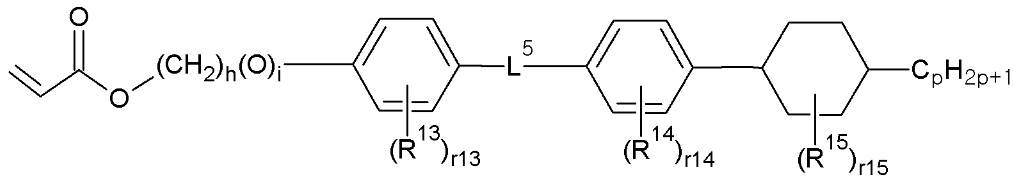

Chemical Formula 2C

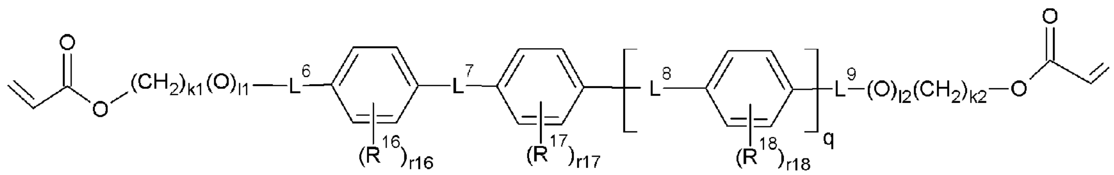

In Chemical Formulae 2A to 2C,

M is selected from a cyano group, a cyano-containing group, a hydroxy group, a substituted or unsubstituted carboxylic acid group, and a combination thereof,
$R^{11}$, $R'^{11}$, and $R^{12}$ to $R^{18}$ are independently a substituted or unsubstituted C1 to C10 alkyl group, a substituted or unsubstituted C1 to C10 alkoxy group, a halogen atom, a halogen-containing group, and a combination thereof,
$r_{11}$, $r'_{11}$, $r_{12}$, $r_{13}$, $r_{14}$, $r_{16}$, $r_{17}$, and $r_{18}$ are independently an integer from 0 to 4,
$r_{15}$ is an integer from 0 to 8,
$L^4$ to $L^9$ are independently selected from a single bond, -C(=O)O-,-OC(=O)-, a C3 to C10 alkylene group, and a C3 to C10 alkylene group further including -C(=O)O- or -OC(=O)-,
e, h, p, $k_1$, and $k_2$ are independently an integer of 1 to 10, and
n, f, i, $l_1$, $l_2$, and q are independently 0 or 1.

The liquid crystal includes the first liquid crystal, the second liquid crystal, and the third liquid crystal, wherein an amount of the first liquid crystal in the liquid crystal is about 10 percent by weight to about 35 percent by weight, an amount of the second liquid crystal in the liquid crystal is about 10 percent by weight to about 35 percent by weight, and an amount of the third liquid crystal in the liquid crystal is about 30 percent by weight to about 80 percent by weight based on the total amount of the liquid crystal.
The liquid crystal layer may satisfy $0 < n_z < 1$, wherein $n_z$ is a refractive index in a direction perpendicular to a

slow axis and a fast axis of the liquid crystal layer.

The liquid crystal layer may satisfy Relationship Equation 1.

Relationship Equation 1

$$n_x > n_z > n_y$$

In Relationship Equation 1,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer.

The liquid crystal layer may satisfy Relationship Equation 2.

Relationship Equation 2

$$0 < (n_x - n_z)/(n_x - n_y) < 1$$

In Relationship Equation 2,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer.

The liquid crystal layer may satisfy Relationship Equation 2a.

Relationship Equation 2a

$$0.3 \leq (n_x - n_z)/(n_x - n_y) < 0.95$$

In Relationship Equation 2a,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer.

The polysiloxane may be present in a position adjacent to the surface of the liquid crystal layer.

The liquid crystal may have an optical axis arranged to be tilted with respect to the surface of the liquid crystal layer.

The liquid crystal layer may include a first surface and a second surface facing the first surface, wherein tilt angles of the liquid crystals may become gradually larger from the first surface to the second surface.

The tilt angles of the liquid crystals at the second surface may range from about 30° to about 75°.

The tilt angles of the liquid crystals at the first surface may range from greater than about 0° to less than or equal to about 5°.

The liquid crystal layer may further include an alignment layer contacting the first surface.

According to another embodiment, an antireflective film includes:

the optical film, and
a polarizer disposed on one surface of the optical film.

According to another embodiment, a display device includes:

a display panel, and
the optical film or the antireflective film.

BRIEF DESCRIPTION OF THE DRAWINGS

These and/or other aspects will become apparent and more readily appreciated from the following description of the embodiments, taken in conjunction with the accompanying drawings in which:

FIG. 1 is a cross-sectional view showing an optical film according to an embodiment,
FIG. 2 is a cross-sectional view showing an antireflective film according to an embodiment,
FIG. 3 is a schematic view showing an external light anti-reflection principle of an antireflective film according to an embodiment,
FIG. 4 is a schematic view showing a viewing angle improvement principle of an antireflective film according to an embodiment,
FIG. 5 is a cross-sectional view schematically showing an organic light emitting device according to an embodiment,
FIG. 6 is a cross-sectional view schematically showing a liquid crystal display according to an embodiment, and
FIGS. 7 to 10 are respectively 45° polarizing microscope photographs respectively showing the optical films according to Examples 2, 3, and 4 and Comparative Example 6.

DETAILED DESCRIPTION OF THE EMBODIMENTS

Exemplary embodiments will hereinafter be described in detail, and may be easily performed by those who have common knowledge in the related art. However, this disclosure may be embodied in many different forms and should not be construed as limited to the exemplary embodiments set forth herein.
If not defined otherwise, all terms (including technical and scientific terms) in the specification may be defined as they are commonly understood by one skilled in the art. The terms defined in a generally-used dictionary may not be interpreted ideally or exaggeratedly unless clearly defined as such. In addition, unless explicitly described to the contrary, the word "comprise" and variations such as "comprises" or "comprising," will be understood to imply the inclusion of stated elements but not the exclusion of any other elements.
It will be understood that when an element is referred to as being "on" another element, it may be directly on the other element or intervening elements may be present therebetween. In contrast, when an element is referred to as being "directly on" another element, there are no intervening elements present.
It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, a first element, component, region, layer, or section discussed below could be termed a second element, component, region, layer, or section without departing from the teachings of the present embodiments.
The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." As used herein, the term "and/or" includes any and all combinations of one or more of the associated listed items. Expressions such as "at least one of," when preceding a list of elements, modify the entire list of elements and do not modify the individual elements of the list.
It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.
"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system).
Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.
"Mixture" as used herein is inclusive of all types of combinations, including blends, alloys, solutions, and the like.
As used herein, the term "alkyl group" may refer to a group derived from a straight or branched chain saturated

aliphatic hydrocarbon having the specified number of carbon atoms and having a valence of one.

As used herein, the term "alkoxy group" may refer to "alkyl-O-", wherein the term "alkyl" has the same meaning as described above.

As used herein, the term "alkenyl group" may refer to a straight or branched chain, monovalent hydrocarbon group having at least one carbon-carbon double bond.

As used herein, the term "alkenyloxy group" may refer to the group "alkenyl-O-", wherein "alkenyl" is the same as defined above.

As used herein, the term "alkynyl group" may refer to a straight or branched chain, monovalent hydrocarbon group having at least one carbon-carbon triple bond.

As used herein, the term "alkynyloxy group" may refer to the group "alkynyl-O-", wherein "alkynyl" is the same as defined above.

As used herein, the term "cycloalkyl group" may refer to a monovalent group having one or more saturated rings in which all ring members are carbon.

As used herein, the term "aryl group", which is used alone or in combination, may refer to a monovalent aromatic hydrocarbon group containing at least one ring and having the specified number of carbon atoms. The term "aryl group" may be construed as including a group with an aromatic ring fused to at least one cycloalkyl ring.

The term "heteroaryl group" may refer to an aryl group including carbon and 1 to 3 heteroatoms selected from the group consisting of N, O, S, and P as ring atoms.

As used herein, the term "alkylene group" may refer to a straight or branched saturated aliphatic hydrocarbon group having a valence of at least two, optionally substituted with one or more substituents where indicated, provided that the valence of the alkylene group is not exceeded.

As used herein, the term "alkenylene group" may refer to a straight or branched aliphatic hydrocarbon group having a valence of at least two, having at least one carbon-carbon double bond, optionally substituted with one or more substituents where indicated, provided that the valence of the alkenylene group is not exceeded.

As used herein, the term "alkynylene group" may refer to a straight or branched aliphatic hydrocarbon group having a valence of at least two, having at least one carbon-carbon triple bond, optionally substituted with one or more substituents where indicated, provided that the valence of the alkynylene group is not exceeded.

As used herein, when specific definition is not otherwise provided, the term "cyano-containing group" refers to a C1 to C30 alkyl group, a C2 to C30 alkenyl group, or a C2 to C30 alkynyl group where at least one hydrogen is replaced by a cyano group. Specific examples of a cyano-containing group may be a dicyanomethyl group, a dicyanovinyl group, and a cyanoethynyl group.

As used herein, when specific definition is not otherwise provided, the term "halogen-containing group" refers to a C1 to C30 alkyl group, a C2 to C30 alkenyl group, or a C2 to C30 alkynyl group where at least one hydrogen is replaced by a halogen group.

As used herein, when a definition is not otherwise provided, the term "substituted" refers to replacement of a hydrogen atom of a compound or a functional group by a substituent selected from a halogen atom (F, Br, Cl, or I), a hydroxy group, a C1 to C20 alkoxy group, a cyano group, a nitro group ($-NO_2$), an amino group (-NRR', wherein R and R' are independently hydrogen or a C1 to C6 alkyl group), a C1 to C20 ester group, a C1 to C20 alkyl group, a C3 to C20 cycloalkyl group, a C3 to C20 cycloalkenyl group, a C6 to C20 cycloalkynyl group, a C2 to C20 alkenyl group, a C2 to C20 alkynyl group, a C6 to C20 aryl group, a C7 to 20 alkylaryl group, a C3 to C20 heteroaryl group, an azido group ($-N_3$), an amidino group ($-C(=NH)NH_2$), a hydrazino group ($-NHNH_2$), a hydrazono group ($=N(NH_2)$, an aldehyde group (-C(=O)H), a carbamoyl group ($-C(O)NH_2$), a thiol group (-SH), a carboxyl group (-COOH) or a salt thereof (-C(=O)OM, wherein M is an organic or inorganic cation), a sulfonic acid group ($-SO_3H$) or a salt thereof ($-SO_3M$, wherein M is an organic or inorganic cation), a phosphoric acid group ($-PO_3H_2$) or a salt thereof ($-PO_3MH$ or $-PO_3M_2$, wherein M is an organic or inorganic cation), and a combination thereof.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted C1 to C30 alkyl" refers to a C1 to C30 alkyl group substituted with C6 to C20 aryl group, the total number of carbon atoms in the resulting aryl substituted alkyl group is C7 to C50.

Hereinafter, a composition for an optical film according to an embodiment is described.

A composition for an optical film according to an embodiment includes at least one liquid crystal and polysiloxane.

The liquid crystal may have a rod shape aligned in one direction, and may be, for example, a monomer, an oligomer, or a polymer. The liquid crystal may have, for example, positive or negative birefringence values ($\Delta n$). Herein, the birefringence values ($\Delta n$) may be expressed by $n_e$-$n_o$, wherein $n_e$ is a refractive index of light parallel to an optical axis, and wherein $n_o$ is a refractive index of light perpendicular to an optical axis.

The liquid crystal may be a reactive mesogen liquid crystal, and may include, for example, at least one mesogenic moiety and at least one polymerizable functional group. The reactive mesogenic liquid crystal may include at least one

of, for example, a rod-shaped aromatic derivative having at least one polymerizable functional group, 1-methyl propylene glycol, propylene glycol 2-acetate, and a compound represented by $P^1$-$A^1$-(L-$A^2$)$_n$-$P^2$ (wherein at least one of $P^1$ and $P^2$ is a polymerizable functional group, independently selected from an acryloxy group, a methacryloxy group, an acryloyl group, a vinyl group, a vinyloxy group, an epoxy group, or a combination thereof, $A^1$ and $A^2$ independently include 1,4-phenylene group, a naphthalene-2,6-diyl group, or a combination thereof, L is a single bond, -C(=O)O-, -OC(=O)-, or a combination thereof, and n is 0, 1 or 2), but is not limited thereto.

The liquid crystal may be a thermosetting liquid crystal or a photocurable liquid crystal. For example, the liquid crystal may be a photocurable liquid crystal. When the liquid crystal is a photocurable liquid crystal, the light may be ultraviolet rays having a wavelength ranging from about 250 nanometers (nm) to about 400 nm.

The liquid crystal may include one or more liquid crystal(s) which may be the same of different.

For example, the liquid crystal may include at least one of a first liquid crystal represented by Chemical Formula 2A, a second liquid crystal represented by Chemical Formula 2B, and a third liquid crystal represented by Chemical Formula 2C.

Chemical Formula 2A

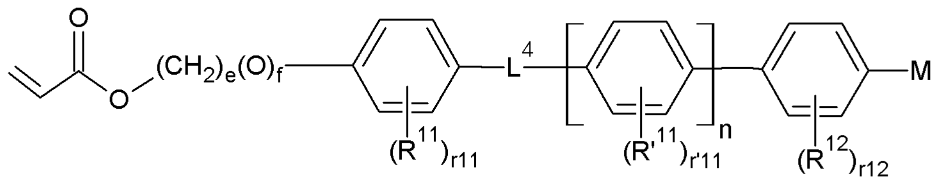

Chemical Formula 2B

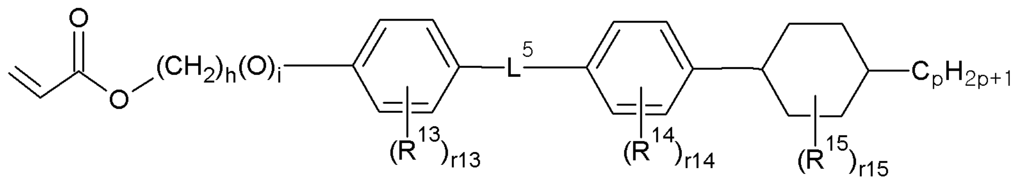

Chemical Formula 2C

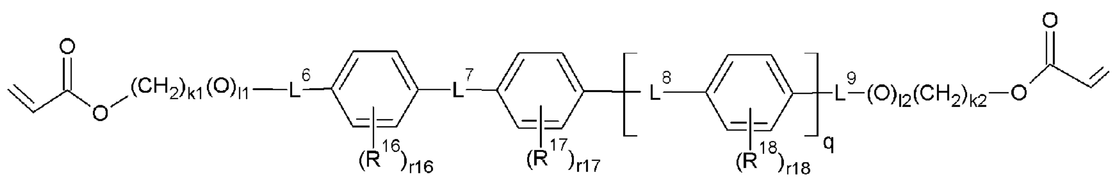

In Chemical Formulae 2A to 2C,

M is selected from a cyano group, a cyano-containing group, a hydroxy group, a substituted or unsubstituted carboxylic acid group, and a combination thereof,

$R^{11}$, $R'^{11}$, and $R^{12}$ to $R^{18}$ are independently a substituted or unsubstituted C1 to C10 alkyl group, a substituted or unsubstituted C1 to C10 alkoxy group, a halogen atom, a halogen-containing group, and a combination thereof,

$r_{11}$, $r'_{11}$, $r_{12}$, $r_{13}$, $r_{14}$, $r_{16}$, $r_{17}$, and $r_{18}$ are independently an integer from 0 to 4,

$r_{15}$ is an integer from 0 to 8,

$L^4$ to $L^9$ are independently selected from a single bond, -C(=O)O-,-OC(=O)-, a C3 to C10 alkylene group, and a C3 to C10 alkylene group further including -C(=O)O- or -OC(=O)-,

e, h, p, $k_1$, and $k_2$ are independently an integer of 1 to 10, and

n, f, i, $l_1$, $l_2$, and q are independently 0 or 1.

For example, the liquid crystal may include the first liquid crystal and the third liquid crystal in an amount of, for example, about 10 percent by weight (wt%) to about 90 wt% of the first liquid crystal and about 10 wt% to about 90 wt%

of the third liquid crystal based on the total amount of the liquid crystal.

In an embodiment, the liquid crystal may include the second liquid crystal and the third liquid crystal in an amount of, for example, about 10 wt% to about 90 wt% of the second liquid crystal and about 10 wt% to about 90 wt% of the third liquid crystal based on the total amount of the liquid crystal.

In another embodiment, the liquid crystal may include the first liquid crystal and the second liquid crystal in an amount of, for example, about 10 wt% to about 90 wt% of the first liquid crystal and about 10 wt% to about 90 wt% of the second liquid crystal based on the total amount of the liquid crystal.

In yet another embodiment, the liquid crystal may include the first liquid crystal, the second liquid crystal, and the third liquid crystal in an amount of, for example, about 10 wt% to about 35 wt% of the first liquid crystal, about 10 wt% to about 35 wt% of the second liquid crystal, and about 30 to about 80 wt% of the third liquid crystal based on the total amount of the liquid crystal.

The liquid crystal may be included in an amount of about 5 wt% to about 50 wt%, for example, about 5 wt% to about 40 wt% or about 10 wt% to about 35 wt% based on the total amount of the composition. While not wishing to be bound by theory, it is understood that within the above ranges, excellent optical properties of the optical film may be effectively attained.

The polysiloxane may include a structural unit represented by Chemical Formula 1A and a structural unit represented by Chemical Formula 1B.

Chemical Formula 1A

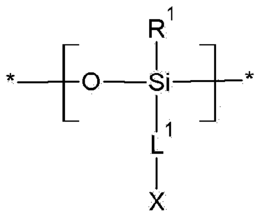

Chemical Formula 1B

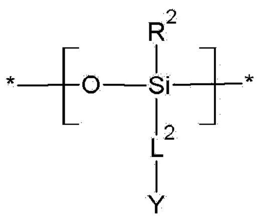

In Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,

$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,

X is selected from a substituted or unsubstituted C6 to C30 aryl group and a substituted or unsubstituted C3 to C30 heteroaryl group, and

Y is selected from a substituted or unsubstituted acryloxy group, a substituted or unsubstituted methacryloxy group, a substituted or unsubstituted acryloyl group, a substituted or unsubstituted methacryloyl group, a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group. Examples of the alkenyl group may be a vinyl group, an allyl group, and the like, and examples of the alkenyloxy group may be a vinyloxy group, an allyloxy group, and the like.

The polysiloxane including the structural unit represented by Chemical Formula 1A and the structural unit represented by Chemical Formula 1B may be an alternate copolymer, a block copolymer, or a random copolymer.

The polysiloxane includes a siloxane main chain, and a structural unit represented by Chemical Formula 1A including X as a first side chain and a structural unit represented by Chemical Formula 1B including Y as a second side

chain. That is, the structural unit represented by Chemical Formula 1A including X reduces tilt angles of liquid crystals due to $\pi$-$\pi$ stacking with an aromatic ring of the liquid crystals, and the structural unit represented by Chemical Formula 1B including Y increases tilt angles of liquid crystals due to an interaction with the polymerizable functional group at terminal ends of the liquid crystals. The X and Y as side chains may control tilt angles of liquid crystals within a predetermined range due to the interaction with liquid crystals, and thereby arrangement and/or a refractive index of liquid crystals may be controlled.

The structural unit represented by Chemical Formula 1A and the structural unit represented by Chemical Formula 1B may be present in a mole ratio of about 1:9 to about 9:1, for example, about 2:8 to about 5:5, about 3:7 to about 5:5, or about 4:6 to about 5:5. While not wishing to be bound by theory, it is understood that within the above ranges, surface tilt angles of the liquid crystals may be efficiently controlled.

Both terminal ends of the polysiloxane may independently have a functional group selected from a substituted or unsubstituted C1 to C20 alkyl group, a substituted or unsubstituted silyl group, a substituted or unsubstituted C6 to C30 aryl group, a substituted or unsubstituted C2 to C20 alkenyl group, a substituted or unsubstituted C2 to C20 alkynyl group, and a combination thereof.

The polysiloxane may further include a structural unit represented by Chemical Formula 1C.

Chemical Formula 1C

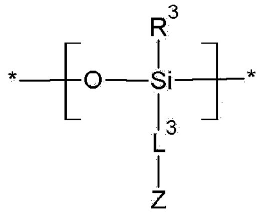

In Chemical Formula 1C,

$R^3$ is selected from hydrogen, a substituted or unsubstituted C1 to C30 alkyl group, a substituted or unsubstituted C6 to C30 aryl group, and a combination thereof,
$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and
Z is a substituted or unsubstituted C1 to C30 alkyl group or a substituted or unsubstituted C1 to C30 alkoxy group.

The structural unit represented by Chemical Formula 1C may be present between the structural unit represented by Chemical Formula 1A and the structural unit represented by Chemical Formula 1B. The structural unit represented by Chemical Formula 1C plays a role of a spacer between the structural unit represented by Chemical Formula 1A and the structural unit represented by Chemical Formula 1B, and facilitates an interaction between the X and the aromatic ring of the liquid crystals and between the Y and the polymerizable functional group at the terminal end of the liquid crystals.

The structural unit represented by Chemical Formula 1C may be included in an amount of about 10 mole percent (mol%) to about 80 mol%, for example, about 20 mol% to about 70 mol%, for example, about 30 mol% to about 60 mol%, based on 100 mol% of the polysiloxane.

For example, in Chemical Formulae 1A, 1B, and 1C, $R^1$ to $R^3$ are independently hydrogen or a substituted or unsubstituted C1 to C10 alkyl group, and for example, $R^1$ to $R^3$ are independently a methyl group.

For example, X of the structural unit represented by Chemical Formula 1A may be a substituted or unsubstituted phenyl group, a substituted or unsubstituted biphenyl group, or a substituted or unsubstituted naphthyl group.

$L^1$ of Chemical Formula 1A, $L^2$ of Chemical Formula 1B, and $L^3$ of Chemical Formula 1C may be independently selected from a single bond, a substituted or unsubstituted C1 to C10 alkylene group, a substituted or unsubstituted C2 to C10 alkenylene group, a substituted or unsubstituted C2 to C10 alkynylene group, or a combination thereof. At least one hydrogen of the alkylene group, at least one hydrogen of the alkenylene group, or at least one hydrogen of the alkynylene group may be independently substituted with a substituent. The alkylene group, the alkenylene group, or the alkynylene group may also independently include at least one linking group selected from -O-,-C(=O)-, -C(=O)O-, -OC(=O)-, -N($R^a$)-, and -C(=O)N($R^b$)- in their main chains. Herein, $R^a$ and $R^b$ may independently be hydrogen or a C1 to C10 alkyl group.

For example, $L^1$ of Chemical Formula 1A, $L^2$ of Chemical Formula 1B, and $L^3$ of Chemical Formula 1C may independently be a single bond, a substituted or unsubstituted C1 to C5 alkylene group, a substituted or unsubstituted C2 to C5 alkenylene group, or a substituted or unsubstituted C2 to C5 alkynylene group.

The polysiloxane may have a weight average molecular weight of about 1,000 Daltons to about 50,000 Daltons, for example, about 2,000 Daltons to about 30,000 Daltons or about 3,000 Daltons to about 20,000 Daltons.

The polysiloxane may be included in an amount of about 0.001 to about 5 wt%, for example, about 0.001 to about 2 wt%, about 0.001 to about 0.5 wt%, about 0.02 to about 0.1 wt%, or about 0.01 to about 0.5 wt% based on the total amount of the composition for an optical film. While not wishing to be bound by theory, it is understood that within the above ranges, reflectance and color shift may be reduced, and thereby, display characteristics and surface defects may be improved.

The composition for an optical film may further include a reaction initiator. The reaction initiator may be a photoinitiator, for example, a free radical photoinitiator and/or an ionic photoinitiator.

The reaction initiator may be included in an amount of about 0.01 to 5 wt%, for example, about 0.1 to 4 wt% or about 0.1 to 2 wt% based on the total amount of the composition for an optical film. While not wishing to be bound by theory, it is understood that within the above ranges, reactivity may be effectively increased.

The composition for an optical film may further include an additive. The additive may be a sensitizer, a surfactant, a dissolution aid, and/or a dispersing agent, but is not limited thereto.

The composition for an optical film may further include a solvent that may dissolve and/or disperse the above components. The solvent that may dissolve and/or disperse the above components may not be particularly limited as long as it does not cause physical or chemical damage to the substrate. The solvent may be, for example, at least one selected from deionized water, methanol, ethanol, propanol, iso-propanol, 2-methoxyethanol, 2-ethoxyethanol, 2-propoxyethanol, 2-butoxyethanol, methylcellosolve, ethylcellosolve, butylcellosolve, diethylene glycol methyl ether, diethylene glycol ethyl ether, dipropylene glycol methyl ether, toluene, xylene, hexane, heptane, octane, ethyl acetate, butyl acetate, diethylene glycol dimethyl ether, diethylene glycol dethyl ether, methyl ethoxy propionate, ethyl ethoxy propionate, ethyl lactate, propylene glycol methyl ether acetate, propylene glycol methyl ether, propylene glycol propyl ether, methyl cellosolve acetate, ethyl cellosolve acetate, diethylene glycol monomethyl ether acetate, diethylene glycol monoethyl ether acetate, acetone, methyl ethyl ketone, methyl iso-butyl ketone (MIBK), cyclopentanone, cyclohexanone, dimethyl formamide (DMF), N,N-dimethyl acetamide (DMAc), N-methyl-2-pyrrolidone, $\gamma$-butyrolactone, diethyl ether, ethylene glycol dimethyl ether, tetrahydrofuran, acetylacetone, acetonitrile, chloroform, dichloromethane, tetrachloroethane, trichloroethylene, tetrachloroethylene, chlorobenzene, and benzene. The solvent may be a single solvent or a combination of two or more solvents.

The solvent may be included in a balance amount other than the above components based on the total amount of the composition.

The composition for an optical film may be applied on the substrate and may be dried to form a film.

The substrate may be, for example, a glass substrate, a metal substrate, a semiconductor substrate, or a polymer substrate, and the polymer substrate may be, for example, a substrate made of polyethylene terephthalate (PET), polyvinyl alcohol (PVA), polycarbonate (PC), triacetyl cellulose (TAC), a derivative thereof, and/or a combination thereof, but is not limited thereto.

The composition for an optical film may be, for example, applied using a solution process such as spin coating, slit coating, and/or inkjet coating, and a thickness thereof may be controlled considering a refractive index of the film.

The coated composition for an optical film may be, for example, dried at a temperature that is greater than or equal to the boiling point of the solvent.

Hereinafter, an optical film formed using the composition for an optical film is described referring to the drawings.

As stated above, in the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

FIG. 1 is a cross-sectional view showing an optical film according to an embodiment.

Referring to FIG. 1, an optical film 100 according to an embodiment includes a substrate 110, an alignment layer 115, and a liquid crystal layer 120.

The substrate 110 may include, for example, a glass substrate, a metal substrate, a semiconductor substrate, or a polymer substrate. The polymer substrate may be, for example, a substrate made of polyethylene terephthalate (PET), polyvinyl alcohol (PVA), polycarbonate (PC), triacetyl cellulose (TAC), a derivative thereof, and/or a combination thereof, but is not limited thereto. When the optical film 100 includes another lower layer, in addition to the substrate, the substrate 110 may be the lower layer. The substrate 110 may be omitted when desired.

The alignment layer 115 may have a pretilt angle with the post-described liquid crystals, and thus, may control alignment of the liquid crystals positioned on the substrate 110. In an embodiment, the alignment layer 115 may be formed of polyamic acid, polyimide, or a combination thereof. The surface of the alignment layer 115 may have a plurality of grooves formed through a physical treatment such as rubbing on the surface or a photo-treatment such as photo-alignment.

The liquid crystal layer 120 may include at least one liquid crystal 120a and polysiloxane.

The liquid crystal 120a may have a rod shape aligned in one direction, and may be, for example, a monomer, an oligomer, or a polymer. The liquid crystal 120a may be a reactive mesogen liquid crystal, and may include, for example, at least one mesogenic moiety and at least one polymerizable functional group. The reactive mesogen liquid crystal may include at least one of, for example, a rod-shaped aromatic derivative having at least one polymerizable group, 1-methyl propylene glycol, propylene glycol 2-acetate, and a compound represented by formula $P^1$-$A^1$-(L-$A^2$)$_n$-$P^2$ (wherein at least one of $P^1$ and $P^2$ is a polymerizable functional group such as an acryloxy group, a methacryloxy group, an acryloyl group, a vinyl group, a vinyloxy group, an epoxy group, or a combination thereof, $A^1$ and $A^2$ independently include 1,4-phenylene group, naphthalene-2,6-diyl, or a combination thereof, L includes a single bond, -C(=O)O-, -OC(=O)-, or a combination thereof, and n is 0, 1, or 2), but is not limited thereto.

The liquid crystal 120a may include one or more liquid crystal(s) which may be the same of different.

The liquid crystal 120a may include, for example, at least one of a first liquid crystal represented by Chemical Formula 2A, a second liquid crystal represented by Chemical Formula 2B, and a third liquid crystal represented by Chemical Formula 2C.

Chemical Formula 2A

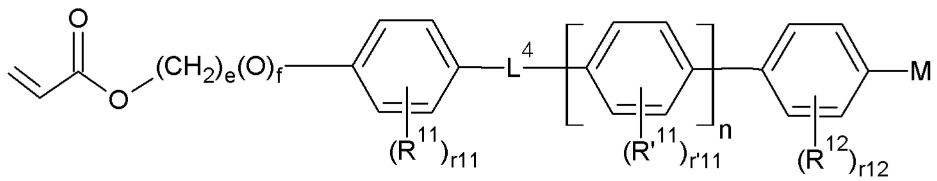

Chemical Formula 2B

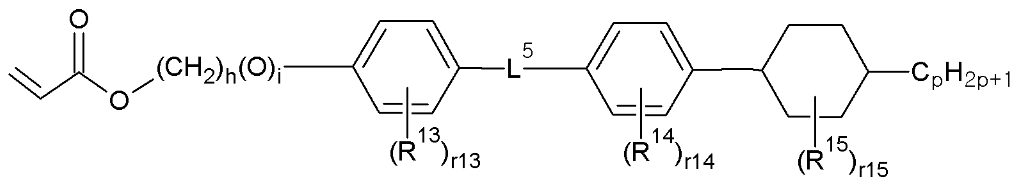

Chemical Formula 2C

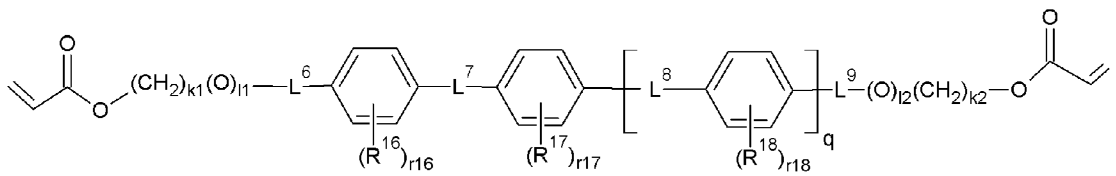

In Chemical Formulae 2A to 2C,

M is selected from a cyano group, a cyano-containing group, a hydroxy group, a substituted or unsubstituted carboxylic acid group, and a combination thereof,
$R^{11}$, $R'^{11}$, and $R^{12}$ to $R^{18}$ are independently selected from a substituted or unsubstituted C1 to C10 alkyl group, a substituted or unsubstituted C1 to C10 alkoxy group, a halogen atom, a halogen-containing group, and a combination thereof,
$r_{11}$, $r'_{11}$, $r_{12}$, $r_{13}$, $r_{14}$, $r_{16}$, $r_{17}$, and $r_{18}$ are independently an integer from 0 to 4,
$r_{15}$ is an integer from 0 to 8,
$L^4$ to $L^9$ are independently selected from a single bond, -C(=O)O-,-OC(=O)-, a C3 to C10 alkylene group, and a C3 to C10 alkylene group further including -C(=O)O- or -OC(=O)-,
e, h, p, $k_1$, and $k_2$ are independently an integer of 1 to 10, and
n, f, i, $l_1$, $l_2$, and q are independently 0 or 1.

In Chemical Formulae 2A to 2C, there may be more than one groups $R^{11}$, $R'^{11}$, and $R^{12}$ to $R^{18}$ present in the phenylene ring or the cyclohexylene ring as long as the number of groups $R^{11}$, $R'^{11}$, and $R^{12}$ to $R^{18}$ does not exceed

the number of hydrogen atoms of the phenylene ring. For example, there may be one to four of groups $R^{11}$, $R'^{11}$, and $R^{12}$ to $R^{18}$ present at the phenylene ring, and the groups $R^{11}$, $R'^{11}$, and $R^{12}$ to $R^{18}$ attached to the same phenylene ring may be the same or different.

In an embodiment, the liquid crystal 120a may include the first liquid crystal and the third liquid crystal, and may include, for example, about 10 wt% to about 90 wt% of the first liquid crystal and about 10 wt% to about 90 wt% of the third liquid crystal based on the total amount of the liquid crystal 120a.

In another embodiment, the liquid crystal 120a may include the second liquid crystal and the third liquid crystal, and may include, for example, about 10 wt% to about 90 wt% of the second liquid crystal and about 10 wt% to about 90 wt% of the third liquid crystal based on the total amount of the liquid crystal 120a.

In still another embodiment, the liquid crystal 120a may include the first liquid crystal and the second liquid crystal, and may include, for example, about 10 wt% to about 90 wt% of the first liquid crystal and about 10 wt% to about 90 wt% of the second liquid crystal based on the total amount of the liquid crystal 120a.

In yet another embodiment, the liquid crystal 120a may include the first liquid crystal, the second liquid crystal, and the third liquid crystal, and may include, for example, about 10 wt% to about 35 wt% of the first liquid crystal, about 10 wt% to about 35 wt% of the second liquid crystal, and about 30 to about 80 wt% of the third liquid crystal based on the total amount of the liquid crystal 120a.

Specific examples of the liquid crystal may be the compounds represented by Chemical Formulae 2A-1 to 2C-5.

Chemical Formula 2A-1

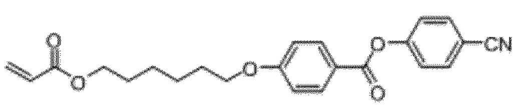

Chemical Formula 2A-2

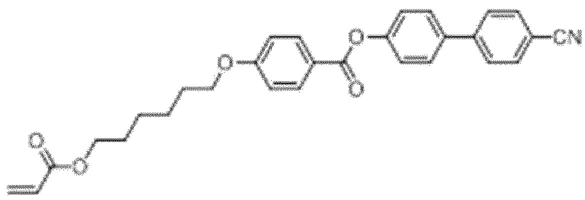

Chemical Formula 2B-1

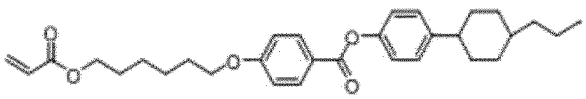

Chemical Formula 2C-1

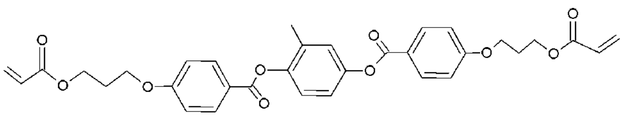

Chemical Formula 2C-2

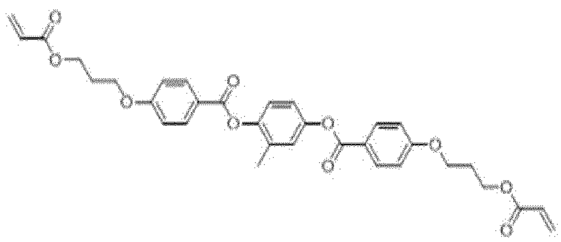

Chemical Formula 2C-3

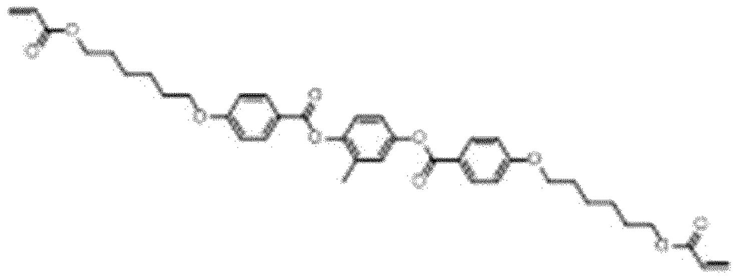

Chemical Formula 2C-4

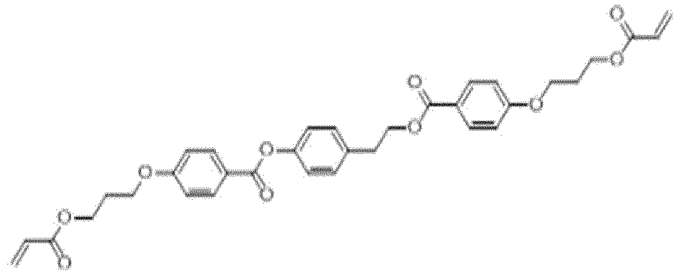

Chemical Formula 2C-5

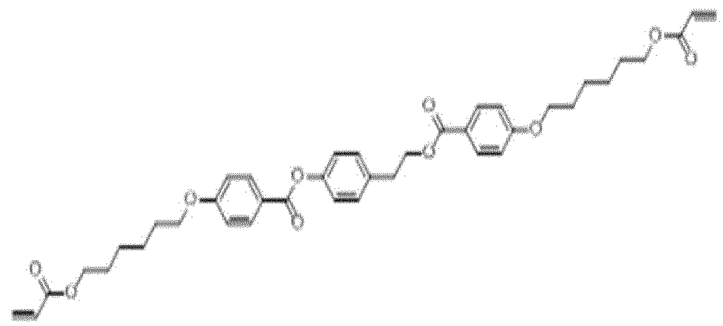

The liquid crystal 120a may have a tilted optical axis with respect to the surface of the liquid crystal layer 120. Herein, the tilting with respect to the surface of the liquid crystal layer 120 means that the liquid crystals are not vertically or horizontally aligned with the length direction of the liquid crystal layer 120. The liquid crystal layer 120 includes the liquid crystal 120a at the surface arranged to have a predetermined tilt angle due to the presence of the polysiloxane.

An angle at which the optical axis of the liquid crystal 120a is tilted with respect to the surface of the liquid crystal layer 120 (hereinafter referred to as "a tilt angle") may change along the thickness direction of the liquid crystal layer 120, and for example, the tilt angle of the liquid crystals 120a may gradually change along the thickness direction of the liquid crystal layer 120.

For example, when the liquid crystal layer 120 has a first surface contacting the alignment layer 115 and a second surface contacting air, the tilt angle of the liquid crystals 120a may become gradually larger from the first surface to the second surface.

For example, the tilt angle ($\theta_1$) of the liquid crystals 120a at the first surface may be a pretilt angle caused by the alignment layer 115, for example, ranging from greater than about 0° to less than or equal to about 5°. The tilt angle ($\theta_1$) may be, for example, in a range of about 1° to about 5° within the range.

The tilt angle ($\theta_2$) of the liquid crystals 120a at the second surface may be, for example, in a range of about 30° to about 75°, for example, about 30° to about 55°, about 35° to about 50°, or about 45°. Herein, the liquid crystal layer 120 may function as a Z-plate. The Z-plate functions as a combination of a -A-plate and a +C-plate, and thus, may minimize reflectance and a color shift of a device. In addition, the liquid crystal layer 120 has no stain or defect on the

surface and exhibits excellent film characteristics.

The tilt angle ($\theta_2$) of the liquid crystals 120a may be adjusted within the range due to the presence of the polysiloxane having the structure on the second surface.

The polysiloxane may include a structural unit represented by Chemical Formula 1A and a structural unit represented by Chemical Formula 1B.

Chemical Formula 1A

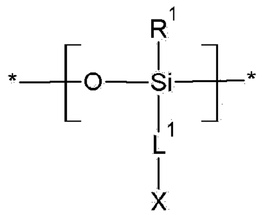

Chemical Formula 1B

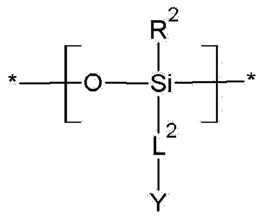

In Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,
$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,
X is selected from a substituted or unsubstituted C6 to C30 aryl group and a substituted or unsubstituted C3 to C30 heteroaryl group, and
Y is selected from a substituted or unsubstituted acryloxy group ($CH_2=CH-CO_2-$), a substituted or unsubstituted methacryloxy group ($CH_2=C(CH_3)-CO_2-$), a substituted or unsubstituted acryloyl group ($CH_2=CH-CO-$), a substituted or unsubstituted methacryloyl group ($CH_2=C(CH_3)-CO_2-$), a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group.

The polysiloxane includes a structural unit represented by Chemical Formula 1A including X as a first side chain and a structural unit represented by Chemical Formula 1B including Y as a second side chain. The structural unit represented by Chemical Formula 1A including X reduces tilt angles of liquid crystals due to $\pi$-$\pi$ stacking with an aromatic ring of the liquid crystals, and the structural unit represented by Chemical Formula 1B including Y increases tilt angles of liquid crystals due to an interaction with the polymerizable functional group at terminal ends of the liquid crystals. The X and Y as side chains may control tilt angles of liquid crystals within a predetermined range due to interacting with liquid crystals, and thereby, arrangement and/or a refractive index of liquid crystals may be controlled.

The polysiloxane including the structural unit represented by Chemical Formula 1A including X and the structural unit represented by Chemical Formula 1B including Y may be an alternate copolymer, a block copolymer, or a random copolymer.

Since the structural unit represented by Chemical Formula 1A including X is hydrophobic, and the structural unit represented by Chemical Formula 1B including Y is hydrophilic, miscibility may be deteriorated when polymers including each structural unit are mixed. As a result, a surface defect may be caused when a film is manufactured. However, when the polysiloxane is present as a copolymer including a structural unit having different characteristics, it does not cause any defect on the film surface.

The structural unit represented by Chemical Formula 1A and the structural unit represented by Chemical Formula 1B may be present in a mole ratio of about 1:9 to about 9:1, for example, about 2:8 to about 5:5, about 3:7 to

about 5:5, or about 4:6 to about 5:5. While not wishing to be bound by theory, it is understood that within the above ranges, surface tilt angles of the liquid crystals may be efficiently controlled.

Both terminal ends of the polysiloxane may independently have a functional group selected from a substituted or unsubstituted C1 to C20 alkyl group, a substituted or unsubstituted silyl group, a substituted or unsubstituted C6 to C30 aryl group, a substituted or unsubstituted C2 to C20 alkenyl group, a substituted or unsubstituted C2 to C20 alkynyl group, and a combination thereof.

The polysiloxane may further include a structural unit represented by Chemical Formula 1C.

Chemical Formula 1C

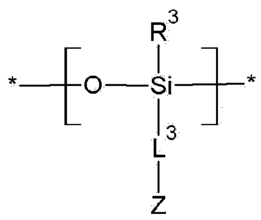

In Chemical Formula 1C,

$R^3$ is selected from hydrogen, a substituted or unsubstituted C1 to C30 alkyl group, a substituted or unsubstituted C6 to C30 aryl group, and a combination thereof,

$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and

Z is a substituted or unsubstituted C1 to C30 alkyl group or a substituted or unsubstituted C1 to C30 alkoxy group.

The structural unit represented by Chemical Formula 1C may be present between the structural unit represented by Chemical Formula 1A and the structural unit represented by Chemical Formula 1B. The structural unit represented by Chemical Formula 1C plays a role of a spacer between the structural unit represented by Chemical Formula 1A and the structural unit represented by Chemical Formula 1B, and facilitates an interaction between X and an aromatic ring of the liquid crystals and Y and a polymerizable functional group at the terminal end of the liquid crystals.

For example, in Chemical Formulae 1A, 1B, and 1C, $R^1$ to $R^3$ may independently be hydrogen or a substituted or unsubstituted C1 to C10 alkyl group, for example, $R^1$ to $R^3$ may independently be a methyl group.

For example, X of the structural unit represented by Chemical Formula 1A may be a substituted or unsubstituted phenyl group, a substituted or unsubstituted biphenyl group, or a substituted or unsubstituted naphthyl group.

$L^1$ of Chemical Formula 1A, $L^2$ of Chemical Formula 1B, and $L^3$ of Chemical Formula 1C may be independently selected from a single bond, a substituted or unsubstituted C1 to C10 alkylene group, a substituted or unsubstituted C2 to C10 alkenylene group, a substituted or unsubstituted C2 to C10 alkynylene group, or a combination thereof. At least one hydrogen of the alkylene group, at least one hydrogen of the alkenylene group, or at least one hydrogen of the alkynylene group may be independently substituted with a substituent. The alkylene group, the alkenylene group, or the alkynylene group may also independently include at least one linking group selected from -O-,-C(=O)-, -C(=O)O-, -OC(=O)-, -N($R^a$)-, and -C(=O)N($R^b$)- in their main chains. Herein, $R^a$ and $R^b$ may independently be hydrogen or a C1 to C10 alkyl group.

For example, $L^1$ of Chemical Formula 1A, $L^2$ of Chemical Formula 1B, and $L^3$ of Chemical Formula 1C may independently be a single bond, a substituted or unsubstituted C1 to C5 alkylene group, a substituted or unsubstituted C2 to C5 alkenylene group, or a substituted or unsubstituted C2 to C5 alkynylene group.

The polysiloxane may have a weight average molecular weight of about 1,000 Daltons to 50,000 Daltons, for example, about 2,000 Daltons to 30,000 Daltons or about 3,000 Daltons to 20,000 Daltons.

The polysiloxane is mainly distributed on the surface of the liquid crystal layer 120 contacting the air, that is, the second surface of the liquid crystal layer 120, and alignment and/or a refractive index of the liquid crystals 120a adjacent to the polysiloxane may be adjusted by side chains (X, Y) bonded with a siloxane backbone. Accordingly, the liquid crystals 120a adjacent to the polysiloxane may be easily aligned with a tilt angle ($\theta_2$) of about 30° to about 75°, for example, about 30° to 55°, about 35° to 50°, or about 45°, and the tilt angle of the liquid crystals 120a may gradually change from the first surface at the substrate 110 to the second surface on the interface with the air.

The liquid crystal layer 120 may satisfy $0 < n_z < 1$, wherein $n_z$ is a refractive index in a direction perpendicular to a slow axis and a fast axis of the liquid crystal layer.

The liquid crystal layer 120 may satisfy Relationship Equation 1.

Relationship Equation 1

$$n_x > n_z > n_y$$

In Relationship Equation 1,

$n_x$ is a refractive index in a direction having a highest refractive index in a plane of the liquid crystal layer 120 (hereinafter referred to as "a slow axis"),
$n_y$ is a refractive index in a direction having a lowest refractive index in a plane of the liquid crystal layer 120 (hereinafter referred to as "a fast axis"), and
$n_z$ is a refractive index in a direction perpendicular to the fast axis and the slow axis of the liquid crystal layer.

The liquid crystal layer 120 may satisfy Relationship Equation 2.

Relationship Equation 2

$$0 < (n_x - n_z)/(n_x - n_y) < 1$$

The liquid crystal layer 120 may satisfy Relationship Equation 2a.

Relationship Equation 2a

$$0.3 \leq (n_x - n_z)/(n_x - n_y) < 0.95$$

The liquid crystal layer 120 satisfies the refractive index condition, and thus, may equally realize a circularly polarized light effect in all directions and compensate display characteristics at the side as well as the front of the liquid crystal layer 120.

The liquid crystal layer 120 may have reverse wavelength dispersion phase delay. The phase delay may be represented by in-plane retardation ($R_e$), and the in-plane retardation ($R_e$) may be represented by $R_e = (n_x - n_y)d$. Herein $n_x$ is a refractive index of the liquid crystal layer at a slow axis, $n_y$ is a refractive index of the liquid crystal layer at a fast axis, and d is a thickness of the liquid crystal layer 120.

The reverse wavelength dispersion phase delay has higher retardation to light having a long wavelength than retardation to light having a short wavelength, and in-plane retardation ($R_e$) of the liquid crystal layer 120 for a 450 nm, 550 nm, and 650 nm wavelengths may, for example, satisfy the following Relationship Equation 3.

Relationship Equation 3

$$R_e(450\ nm) < R_e(550\ nm) \leq R_e(650\ nm)$$

In Relationship Equation 3,

$R_e$ (450 nm) is in-plane retardation for incident light at a 450 nm wavelength,
$R_e$ (550 nm) is in-plane retardation for incident light at a 550 nm wavelength, and
$R_e$ (650 nm) is in-plane retardation for incident light at a 650 nm wavelength.

The wavelength dispersion of the liquid crystal layer 120 may satisfy Relationship Equation 4.

Relationship Equation 4

$$0.7 \leq R_e(450\ nm)/R_e(550\ nm) < 1.0$$

For example, the wavelength dispersion of the liquid crystal layer 120 may satisfy Relationship Equation 4a.

Relationship Equation 4a

$$0.72 \leq R_e(450\ nm)/R_e(550\ nm) \leq 0.92$$

For example, the wavelength dispersion of the liquid crystal layer 120 may satisfy Relationship Equation 4b.

Relationship Equation 4b

$$0.80 \leq R_e(450\ nm)/R_e(550\ nm) \leq 0.85$$

The liquid crystal layer 120 includes a plurality of liquid crystals 120a having tilted optical axes and the tilt angle of the liquid crystals 120a is changed along the thickness direction of the liquid crystal layer 120. Accordingly, a circularly-polarized light effect is equally realized in all directions and external light is effectively prevented from reflection at the side as well as the front, improving side visibility as a result. Particularly, the liquid crystals on the second surface have a tilt angle adjusted in a range of about 30° to about 75°, for example, about 30° to 55°, about 40° to 50°, or about 45°, and thus, may realize Z-plate minimizable reflectance and a color shift.

The optical film 100 may form an antireflective film with a polarizer that may have an external light anti-reflection function.

FIG. 2 is a schematic cross-sectional view showing an antireflective film according to an embodiment.

Referring to FIG. 2, an antireflective film 300 according to an embodiment includes a polarizer 200 and an optical film 100.

The polarizer 200 may be disposed on the side where the light enters, and may be a linear polarizer shifting the polarization of incident light into linear polarization.

The polarizer 200 may be made of, for example, elongated polyvinyl alcohol (PVA) prepared, for example, by drawing a polyvinyl alcohol film, adsorbing iodine or a dichroic dye thereto, and borating and washing the same.

The polarizer 200 may be a polarizing film prepared, for example, by mixing a polymer resin and a dichroic dye and melt blending the polymer resin with the dichroic dye to melt them at a temperature above the melting point of the polymer resin.

The optical film 100 is the same as described above.

An adhesion layer (not shown) may be further disposed between the polarizer 200 and the optical film 100. The adhesion layer effectively adheres between the polarizer 200 and the optical film 100, and may be, for example, made of a pressure sensitive adhesive.

The antireflective film 300 may further include a protective layer (not shown) on one surface of the polarizer 200. The protective layer may be provided for further reinforcing the functionality or improving the durability of the antireflective film 300, or for reducing reflection or glare, and for example, may be a triacetyl cellulose (TAC) film, but is not limited thereto.

The antireflective film 300 may further include a correction layer (not shown) disposed on one surface of the optical film 100. The correction layer may be, for example, a color shift resistant layer, but is not limited thereto.

The anti-reflective film 300 may further include a light blocking layer (not shown) extended along the edge. The light blocking layer may be formed as a strip along the circumference of the antireflective film 300. The light blocking layer may include an opaque material, for example, a black material. For example, the light blocking layer may be made of a black ink.

The antireflective film 300 may include the polarizer 200 and the optical film 100 that are stacked in a roll-to-roll manner, but is not limited thereto.

FIG. 3 is a schematic view showing the external light antireflection principle of an anti-reflective film according to an embodiment.

Referring to FIG. 3, while the incident unpolarized light (hereinafter referred to as "external light") having entered from the outside is passed through the polarizer 200, and the polarized light is shifted into circularly polarized light by passing through the optical film 100, only a first polarized perpendicular component, which is one polarized perpendicular component of two polarized perpendicular components, is transmitted. While the circularly polarized light is reflected in a display panel 40 including a substrate, an electrode, and so on, and changes the circular polarization direction, and the circularly polarized light is passed through the optical film 100 again, only a second polarized perpendicular component, which is the other polarized perpendicular component of the two polarized perpendicular components, may be transmitted. As the second polarized perpendicular component is not passed through the polarizer 200 to the outside, effects of preventing the external light reflection may be provided.

FIG. 4 is a schematic view showing a viewing angle improvement principle of an antireflective film according

to an embodiment.

Referring to FIG. 4, external light goes through a first optical path OP1 in which the light passes through the polarizer 200 and the optical film 100 and reaches the display panel 40 and a second optical path OP2 in which the light is reflected from the display panel 40 and repassed through the optical film 100. The light has a polarization direction that is changed through the first and second optical paths OP1 and OP2 and does not pass through the polarizer 200, showing an external light anti-reflection effect.

Herein, the first and second optical paths OP1 and OP2 may substantially form a mirror image as a reference of the display panel 40. Accordingly, the optical film 100 includes liquid crystals that are tilted and aligned in one direction, but when external light sequentially passes the first optical path OP1 and the second optical path OP2 having opposite directions from each other, a phase difference may be adjusted by summing the slope alignment of liquid crystals 120aa in the first optical path OP1 and the slope alignment of liquid crystals 120ab in the second optical path OP2. Accordingly, an anti-reflection effect may be substantially equivalent in all directions, and a color shift due to reflection of external light at the side as well as the front may be effectively prevented, improving side visibility as a result.

The optical film 100 and the antireflective film 300 may be applied to various display devices.

A display device according to an embodiment includes a display panel and a film disposed on one surface of the display panel. The display panel may be a liquid crystal panel or an organic light emitting panel, but is not limited thereto. The film may be the optical film 100 or the antireflective film 300.

Hereinafter, an organic light emitting display is described as an example of a display device.

Referring to the drawings, an example of an organic light emitting display including the antireflective film 300 is described.

FIG. 5 is a cross-sectional view showing an organic light emitting display according to an embodiment.

Referring to FIG. 5, an organic light emitting display according to an embodiment includes an organic light emitting panel 400 and an antireflective film 300 disposed on one surface of the organic light emitting panel 400.

The organic light emitting panel 400 may include a base substrate 410, a lower electrode 420, an organic emission layer 430, an upper electrode 440, and an encapsulation substrate 450.

The base substrate 410 may be made of glass or plastic.

One of the lower electrode 420 and the upper electrode 440 may be an anode, and the other one may be a cathode. The anode is an electrode to which holes are injected, which may be made of a conducting material having a high work function, while the cathode is an electrode to which electrons are injected, which may be made of a conducting material having a low work function. At least one of the lower electrode 420 and the upper electrode 440 may be made of a transparent conductive material through which the emitted light is transmitted to outside, for example, ITO or IZO.

The organic emission layer 430 includes an organic material which may emit light when a voltage is applied to the lower electrode 420 and the upper electrode 440.

An auxiliary layer (not shown) may be further provided between the lower electrode 420 and the organic emission layer 430 and between the upper electrode 440 and the organic emission layer 430. The auxiliary layer is used to balance electrons and holes, and may include a hole transport layer, a hole injection layer (HIL), an electron injection layer (EIL), and an electron transporting layer, but is not limited thereto.

The encapsulation substrate 450 may be made of glass, metal, or a polymer, and may seal the lower electrode 420, the organic emission layer 430, and the upper electrode 440 to prevent moisture and/or oxygen inflow from the outside.

The antireflective film 300 may be disposed on the side emitting light. For example, in the case of a bottom emission structure emitting light at the side of the base substrate 410, the film may be disposed on the exterior side of the base substrate 410, while in the case of a top emission structure emitting light at the side of the encapsulation substrate 450, the film may be disposed on the exterior side of the encapsulation substrate 450.

The antireflective film 300 may prevent external light from being reflected by a metal such as an electrode of the organic light emitting panel 400 and emitting outside of the organic light emitting device, thereby improving display characteristics of the organic light emitting device.

In addition, the antireflective film 300 may not only show a substantially equivalent anti-reflection effect in all directions, but may also effectively prevent reflectance and a color shift due to refection of external light at the side as well as the front as described above thereby improving side visibility.

Hereinafter, a liquid crystal display (LCD) is described as an example of the display device.

Referring to drawings, an example of a liquid crystal display (LCD) including the optical film 100 is described.

FIG. 6 is a schematic cross-sectional view showing a liquid crystal display (LCD) device according to an embodiment.

Referring to FIG. 6, a liquid crystal display (LCD) according to an embodiment includes a liquid crystal panel 500, and the optical film 100 disposed on one surface of the liquid crystal panel 500.

The liquid crystal panel 500 may be a twist nematic (TN) mode panel, a homeotropic alignment (PVA) mode panel, an in-plane switching (IPS) mode panel, an optically compensated bend (OCB) mode panel, or the like.

The liquid crystal panel 500 may include a first display panel 510, a second display panel 520, and a liquid crystal layer 530 interposed between the first display panel 510 and the second display panel 520.

The first display panel 510 may include, for example, a thin film transistor (not shown) formed on a substrate (not shown) and a first electric field generating electrode (not shown) connected to the same, and the second display panel 520 may include, for example, a color filter (not shown) formed on a substrate (not shown) and a second electric field generating electrode (not shown). However, it is not limited thereto, and the color filter may be included in the first display panel 510, while the first electric field generating electrode and the second electric field generating electrode may be disposed on the first display panel 510 together therewith.

The liquid crystal layer 530 may include a plurality of liquid crystal molecules. The liquid crystal molecules may have positive or negative dielectric anisotropy. When the liquid crystal molecules have positive dielectric anisotropy, the major axes thereof may be aligned substantially parallel to the surface of the first display panel 510 and the second display panel 520 when an electric field is not applied, and the major axes may be aligned substantially perpendicular to the surface of the first display panel 510 and second display panel 520 when an electric field is applied. On the other hand, when the liquid crystal molecules have negative dielectric anisotropy, the major axes may be aligned substantially perpendicular to the surface of the first display panel 510 and the second display panel 520 when an electric field is not applied, and the major axes may be aligned substantially parallel to the surface of the first display panel 510 and the second display panel 520 when an electric field is applied.

The optical film 100 is disposed on the outside of the liquid crystal panel 500. Although the optical film 100 is shown to be provided on both the lower part and the upper part of the liquid crystal panel 500 in the drawing, it is not limited thereto, and the optical film 100 may be formed on only one of the lower part and the upper part of the liquid crystal panel 500.

Hereinafter, the present disclosure is illustrated in more detail with reference to examples. However, these examples are exemplary, and the present disclosure is not limited thereto.

EXAMPLES

Preparation of Composition for Optical Film

Preparation Example 1

A composition for an optical film is prepared by mixing 24.30 percent by weight (wt%) of a liquid crystal mixture including a first liquid crystal represented by Chemical Formula 2A-1 (Merck & Co., Inc.), a second liquid crystal represented by Chemical Formula 2B-1 (Merck & Co., Inc.), and a third liquid crystal represented by Chemical Formula 2C-1 (Merck & Co., Inc.), 0.01 wt% of polysiloxane represented by Chemical Formula 1a (molecular weight (MW) = 3,122 grams per mole (g/mol), a mole ratio of a:b:c = 1:0:1), 0.73 wt% of a photoinitiator (Irgacure 907, Ciba Specialty Chemicals Corp.), 0.24 wt% of a sensitizer (DETX, Sigma Aldrich Co., Ltd.), and 74.72 wt% of a mixed solvent of toluene and methyl ethyl ketone (5:5 weight to weight, wt/wt) and stirring the mixture at room temperature of 24°C for 12 hours (h). Herein, the liquid crystal mixture includes 19.04 wt% of the first liquid crystal, 29.54 wt% of the second liquid crystal, and 51.42 wt% of the third liquid crystal.

Chemical Formula 2A-1

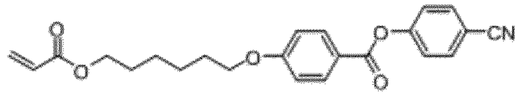

Chemical Formula 2B-1

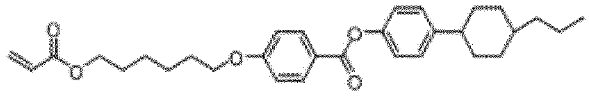

Chemical Formula 2C-1

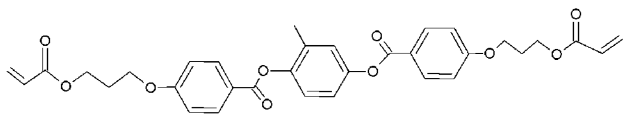

Chemical Formula 1a

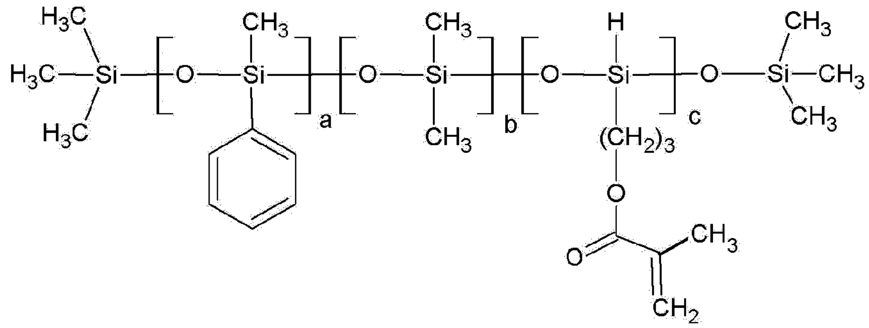

Preparation Example 2

A composition for an optical film is prepared by mixing 24.30 wt% of the liquid crystal mixture, 0.01 wt% of polysiloxane represented by Chemical Formula 1a (MW = 3,122 g/mol, a mole ratio of a:b:c =1:0.6:0.89), 0.73 wt% of a photoinitiator (Irgacure 907, CIBA Specialty Chemicals Corp.), 0.24 wt% of a sensitizer (DETX, Sigma Aldrich Co., Ltd.), and 74.72 wt% of a mixed solvent of toluene and methyl ethyl ketone (5:5 wt/wt) and stirring the mixture at room temperature of 24°C for 12 h.

Preparation Example 3

A composition for an optical film is prepared by mixing 24.30 wt% of the liquid crystal mixture, 0.01 wt% of polysiloxane represented by Chemical Formula 1a (MW = 4,045 g/mol, a mole ratio of a:b:c = 1:0.67:1.93), 0.73 wt% of a photoinitiator (Irgacure 907, CIBA Specialty Chemicals Corp.), 0.24 wt% of a sensitizer (DETX, Sigma Aldrich Co., Ltd.), and 74.72 wt% of a mixed solvent of toluene and methyl ethyl ketone (5:5 wt/wt) and stirring the mixture at room temperature of 24°C for 12 h.

Preparation Example 4

A composition for an optical film is prepared by mixing 24.30 wt% of the liquid crystal mixture, 0.02 wt% of polysiloxane represented by Chemical Formula 1a (MW = 4,045 g/mol, a mole ratio of a:b:c = 1:0.67:1.93), 0.73 wt% of a photoinitiator (Irgacure 907, CIBA Specialty Chemicals Corp.), 0.24 wt% of a sensitizer (DETX, Sigma Aldrich Co., Ltd.), and 74.71 wt% of a mixed solvent of toluene and methyl ethyl ketone (5:5 wt/wt) and stirring the mixture at room temperature of 24°C for 12 h.

Comparative Preparation Example 1

A composition for an optical film is prepared by mixing 24.30 wt% of the liquid crystal mixture, 0.73 wt% of a photoinitiator (Irgacure 907, CIBA Specialty Chemicals Corp.), 0.24 wt% of a sensitizer (DETX, Sigma Aldrich Co., Ltd.), and 74.73 wt% of a mixed solvent of toluene and methyl ethyl ketone (5:5 wt/wt) and stirring the mixture at room temperature of 24°C for 12 h.

Comparative Preparation Example 2

A composition for an optical film is prepared by mixing 24.30 wt% of the liquid crystal mixture, 0.01 wt% of polysiloxane (MW = 5,731 g/mol, RAD 2100, TEGO Inc.), 0.73 wt% of a photoinitiator (Irgacure 907, CIBA Specialty Chemicals, Corp.), 0.24 wt% of a sensitizer (DETX, Sigma Aldrich Co., Ltd.), and 74.72 wt% of a mixed solvent of toluene and methyl ethyl ketone (5:5 wt/wt) and stirring the mixture at room temperature of 24°C for 12 h.

Comparative Preparation Example 3

A composition for an optical film is prepared by mixing 24.30 wt% of the liquid crystal mixture, 0.02 wt% of polysiloxane (MW = 5,731 g/mol, RAD 2100, TEGO Inc.), 0.73 wt% of a photoinitiator (Irgacure 907, CIBA Specialty Chemicals Corp.), 0.24 wt% of a sensitizer (DETX, Sigma Aldrich Co., Ltd.), and 74.71 wt% of a mixed solvent of toluene and methyl ethyl ketone (5:5 wt/wt) and stirring the mixture at room temperature of 24°C for 12 h.

Comparative Preparation Example 4

A composition for an optical film is prepared by mixing 24.30 wt% of the liquid crystal mixture, 0.01 wt% of polysiloxane (MW = 12,950 g/mol, BYK-322, BYK-Chemie GmbH), 0.73 wt% of a photoinitiator (Irgacure 907, CIBA Specialty Chemicals Corp.), 0.24 wt% of a sensitizer (DETX, Sigma Aldrich Co., Ltd.), and 74.72 wt% of a mixed solvent of toluene and methyl ethyl ketone (5:5 wt/wt) and stirring the mixture at room temperature of 24°C for 12 h.

Comparative Preparation Example 5

A composition for an optical film is prepared by mixing 24.30 wt% of the liquid crystal mixture, 0.02 wt% of polysiloxane (MW = 12950 g/mol, BYK-322, BYK-Chemie GmbH), 0.73 wt% of a photoinitiator (Irgacure 907, CIBA Specialty Chemicals Corp.), 0.24 wt% of a sensitizer (DETX, Sigma-Aldrich Co., Ltd.), and 74.71 wt% of a mixed solvent of toluene and methyl ethyl ketone (5:5 wt/wt) and stirring the mixture at room temperature of 24°C for 12 h.

Comparative Preparation Example 6

A composition for an optical film is prepared by mixing 24.30 wt% of the liquid crystal mixture, 0.005 wt% of polysiloxane (MW = 5,731 g/mol, RAD 2100, TEGO Inc.), 0.005 wt% of polysiloxane (MW = 12,950 g/mol, BYK-322, BYK-Chemie GmbH), 0.73 wt% of a photoinitiator (Irgacure 907, CIBA Specialty Chemicals Corp.), 0.24 wt% of a sensitizer (DETX, Sigma-Aldrich Co., Ltd.), and 74.72 wt% of a mixed solvent of toluene and methyl ethyl ketone (5:5 wt/wt) and stirring the mixture at room temperature of 24°C for 12 h.

Comparative Preparation Example 7

A composition for an optical film is prepared by mixing 24.30 wt% of the liquid crystal mixture, 0.01 wt% of polysiloxane (MW = 5,731 g/mol, RAD 2100, TEGO Inc.), 0.01 wt% of polysiloxane (MW = 12,950 g/mol, BYK-322, BYK-Chemie GmbH), 0.73 wt% of a photoinitiator (Irgacure 907, CIBA Specialty Chemicals Corp.), 0.24 wt% of a sensitizer (DETX, Sigma Aldrich Co., Ltd.), and 74.71 wt% of a mixed solvent of toluene and methyl ethyl ketone (5:5 wt/wt) and stirring the mixture at room temperature of 24°C for 12 h.

Formation of Optical Film

Example 1

A polyimide solution (SE-7492K, Nissan Chemical Industries Ltd.) is spin-coated on a 1 millimeter-thick (mm-thick) glass substrate at 1,500 revolutions per minute (rpm) for 15 seconds (s) and dried at 110°C for 2 minutes (min). Subsequently, the coated substrate is baked at 200°C for 1 hour (h), and its surface is rubbed to form a polyimide alignment layer. On the alignment layer, the composition for an optical film according to Preparation Example 1 is spin-coated at 1,500 rpm for 15 s. Subsequently, the substrate is dried at 90°C for 3 min to form a liquid crystal layer. The liquid crystal layer is radiated by ultraviolet (UV) with a light dose of 600 millijoules per square centimeter ($mJ/cm^2$) for 4 seconds and cured to form an optical film.

Example 2

An optical film is formed according to the same method as Example 1, except for using the composition for an optical film according to Preparation Example 2 instead of the composition for an optical film according to Preparation Example 1.

Example 3

An optical film is formed according to the same method as Example 1, except for using the composition for an optical film according to Preparation Example 3 instead of the composition for an optical film according to Preparation Example 1.

Example 4

An optical film is formed according to the same method as Example 1, except for using the composition for an optical film according to Preparation Example 4 instead of the composition for an optical film according to Preparation

Example 1.

Comparative Example 1

An optical film is formed according to the same method as Example 1, except for using the composition for an optical film according to Comparative Preparation Example 1 instead of the composition for an optical film according to Preparation Example 1.

Comparative Example 2

An optical film is formed according to the same method as Example 1, except for using the composition for an optical film according to Comparative Preparation Example 2 instead of the composition for an optical film according to Preparation Example 1.

Comparative Example 3

An optical film is formed according to the same method as Example 1, except for using the composition for an optical film according to Comparative Preparation Example 3 instead of the composition for an optical film according to Preparation Example 1.

Comparative Example 4

An optical film is formed according to the same method as Example 1, except for using the composition for an optical film according to Comparative Preparation Example 4 instead of the composition for an optical film according to Preparation Example 1.

Comparative Example 5

An optical film is formed according to the same method as Example 1, except for using the composition for an optical film according to Comparative Preparation Example 5 instead of the composition for an optical film according to Preparation Example 1.

Comparative Example 6

An optical film is formed according to the same method as Example 1, except for using the composition for an optical film according to Comparative Preparation Example 6 instead of the composition for an optical film according to Preparation Example 1.

Comparative Example 7

An optical film is formed according to the same method as Example 1, except for using the composition for an optical film according to Comparative Preparation Example 7 instead of the composition for an optical film according to Preparation Example 1.

Measurement of Tilt Angles at the second surface (i.e., the surface contacting the air)

Tilt angles at the second surface of the optical films according to Examples 1 to 4 and Comparative Examples 1 to 7 are measured. The surface tilt angles of the optical films according to Examples 3 and 4 and Comparative Examples 1, 4, and 6 are shown in Table 1.

In-plane retardation is measured by attaching a 5x5 square centimeters ($cm^2$) film specimen to AxoScan™ (Axometrics, Inc.) and rotating from a viewing angle of - 80° to 80°. Tilt angles at the second surface are measured by attaching a 5x5 square centimeters ($cm^2$) film specimen to AxoScan™ (Axometrics, Inc.). Herein, the measurement is repeated 10 times by setting a wavelength at 550 nanometers (nm) and averaged. The results are shown in Table 1.

Table 1

| | Tilt angles at the second surface (°) | In-plane retardation ($R_e$, nm) | $n_x$ | $n_y$ | $n_z$ | $(n_x-n_z)/(n_x-n_y)$ |
|---|---|---|---|---|---|---|
| Example 3 | 45 | 131 | 1.555 | 1.470 | 1.478 | 0.947 |
| Example 4 | 37.5 | 143 | 1.541 | 1.476 | 1.482 | 0.893 |
| Comparative Example 1 | 90 | 103 | 1.532 | 1.488 | 1.545 | 1.510 |
| Comparative Example 4 | 10 | 171 | 1.604 | 1.599 | 1.596 | 1.802 |
| Comparative Example 6 | 22.5 | 163 | 1.616 | 1.594 | 1.590 | 1.143 |

Referring to Table 1, the optical films according to Examples 3 and 4, respectively, have surface tilt angles of 45° and 37.5°, i.e., smaller or larger surface tilt angles than those of Comparative Examples 1, 4, and 6. In addition, the optical films of Examples 3 and 4 have refractive indexes satisfying Relationship Equation 2a ($0.3 \leq (n_x-n_z)/(n_x-n_y) < 0.95$), however, the optical films according to Comparative Examples 1, 4, and 6 have refractive indexes beyond the range of Relationship Equation 2a.

Surface Characteristics

The surface of each optical film according to Examples 1 to 4 and Comparative Examples 1 to 7 is measured with an optical microscope to evaluate its surface defects. FIGS. 7 to 9 show 45° polarizing microscope photographs of the optical films according to Examples 2, 3, and 4, and FIG. 10 shows a 45° polarizing microscope photograph of the optical film according to Comparative Example 6. In FIGS. 7 to 10, the optical films according to Examples 2, 3, and 4 show a satisfactory surface state, but the optical film according to Comparative Example 6 turns out to have a surface defect.

While this disclosure has been described in connection with what is presently considered to be practical example embodiments, it is to be understood that the inventive concept is not limited to the disclosed embodiments, but, on the contrary, is intended to cover various modifications and equivalent arrangements included within the scope of the appended claims.

## Claims

**1.** A composition for an optical film, comprising:

a liquid crystal, and
a polysiloxane comprising a structural unit represented by Chemical Formula 1A and a structural unit represented by Chemical Formula 1B:

Chemical Formula 1A

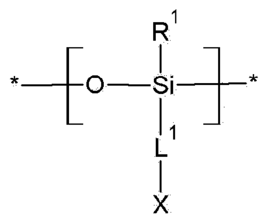

Chemical Formula 1B

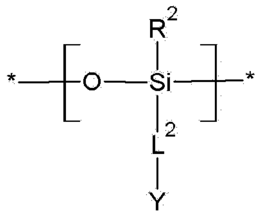

wherein, in Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,
$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,
X is selected from a substituted or unsubstituted C6 to C30 aryl group and a substituted or unsubstituted C3 to C30 heteroaryl group, and
Y is selected from a substituted or unsubstituted acryloxy group, a substituted or unsubstituted methacryloxy group, a substituted or unsubstituted acryloyl group, a substituted or unsubstituted methacryloyl group, a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group.

**2.** The composition of claim 1, wherein a mole ratio of the structural unit represented by Chemical Formula 1A to the structural unit represented by Chemical Formula 1B is 1:9 to 9:1, preferably wherein a mole ratio of the structural unit represented by Chemical Formula 1A to the structural unit represented by Chemical Formula 1B is 2:8 to 5:5.

**3.** The composition of claim 1 or 2, wherein the polysiloxane further comprises a structural unit represented by Chemical Formula 1C:

Chemical Formula 1C

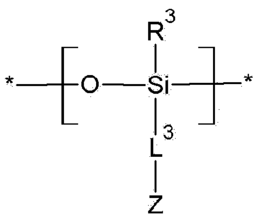

wherein, in Chemical Formula 1C,

$R^3$ is selected from hydrogen, a substituted or unsubstituted C1 to C30 alkyl group, a substituted or unsubstituted C6 to C30 aryl group, and a combination thereof,
$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and
Z is a substituted or unsubstituted C1 to C30 alkyl group or a substituted or unsubstituted C1 to C30 alkoxy group, preferably wherein the structural unit represented by Chemical Formula 1C is present between the structural unit represented by Chemical Formula 1A and the structural unit represented by Chemical Formula 1B.

**4.** The composition of any of claims 1 to 3, wherein an amount of the polysiloxane is 0.001 to 5 percent by weight based on the total amount of the composition for an optical film.

**5.** The composition of any of claims 1 to 4, wherein the polysiloxane has a weight average molecular weight of 1,000 Daltons to 30,000 Daltons.

6. The composition of any of claims 1 to 5, wherein the liquid crystal comprises at least one of a first liquid crystal represented by Chemical Formula 2A, a second liquid crystal represented by Chemical Formula 2B, and a third liquid crystal represented by Chemical Formula 2C:

Chemical Formula 2A

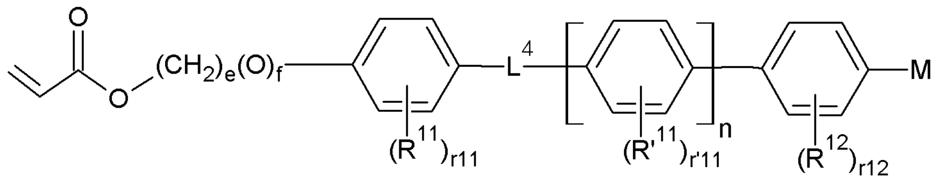

Chemical Formula 2B

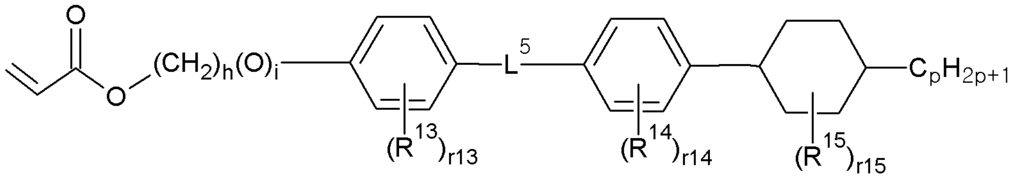

Chemical Formula 2C

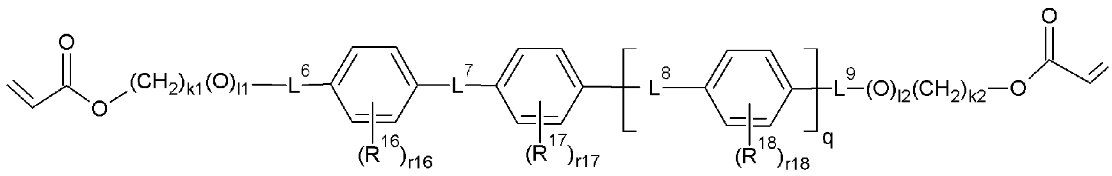

wherein, in Chemical Formulae 2A to 2C,

M is selected from a cyano group, a cyano-containing group, a hydroxy group, a substituted or unsubstituted carboxylic acid group, and a combination thereof,
$R^{11}$, $R'^{11}$, and $R^{12}$ to $R^{18}$ are independently selected from a substituted or unsubstituted C1 to C10 alkyl group, a substituted or unsubstituted C1 to C10 alkoxy group, a halogen atom, a halogen-containing group, and a combination thereof,
$r_{11}$, $r'_{11}$, $r_{12}$, $r_{13}$, $r_{14}$, $r_{16}$, $r_{17}$, and $r_{18}$ are independently an integer from 0 to 4,
$r_{15}$ is an integer from 0 to 8,
$L^4$ to $L^9$ are independently selected from a single bond, -C(=O)O-,-OC(=O)-, a C3 to C10 alkylene group, and a C3 to C10 alkylene group further comprising -C(=O)O- or -OC(=O)-,
e, h, p, $k_1$, and $k_2$ are independently an integer of 1 to 10, and
n, f, i, $l_1$, $l_2$, and q are independently 0 or 1, preferably wherein the liquid crystal comprises a first liquid crystal, a second liquid crystal, and a third liquid crystal, and wherein
an amount of the first liquid crystal in the liquid crystal is 10 percent by weight to 35 percent by weight based on the total amount of the liquid crystal,
an amount of the second liquid crystal in the liquid crystal is 10 percent by weight to 35 percent by weight based on the total amount of the liquid crystal, and
an amount of the third liquid crystal in the liquid crystal is 30 percent by weight to 80 percent by weight based on the total amount of the liquid crystal.

7. The composition of any of claims 1 to 6, wherein the composition for an optical film further comprises a solvent, and wherein the composition comprises:

10 percent by weight to 30 percent by weight of the liquid crystal,
0.001 percent by weight to 5 percent by weight of the polysiloxane, and
a balance amount of the solvent based on the total amount of the composition for an optical film.

**8.** An optical film comprising a liquid crystal layer comprising:

a liquid crystal, and
a polysiloxane comprising a structural unit represented by Chemical Formula 1A and a structural unit represented by Chemical Formula 1B:

Chemical Formula 1A

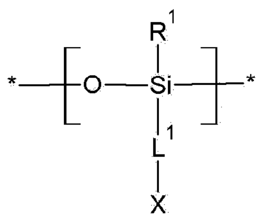

Chemical Formula 1B

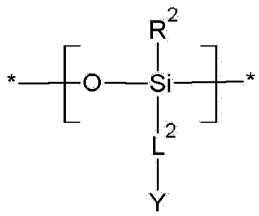

wherein, in Chemical Formulae 1A and 1B,

$R^1$ and $R^2$ are independently selected from hydrogen, a substituted or unsubstituted C1 to C30 alkyl group, a substituted or unsubstituted C6 to C30 aryl group, and a combination thereof,
$L^1$ and $L^2$ are independently selected from a single bond, a substituted or unsubstituted C1 to C10 alkylene group, a substituted or unsubstituted C2 to C10 alkenylene group, a substituted or unsubstituted C2 to C10 alkynylene group, and a combination thereof,
X is selected from a substituted or unsubstituted C6 to C30 aryl group and a substituted or unsubstituted C3 to C30 heteroaryl group, and
Y is selected from a substituted or unsubstituted acryloxy group, a substituted or unsubstituted methacryloxy group, a substituted or unsubstituted acryloyl group, a substituted or unsubstituted methacryloyl group, a substituted or unsubstituted C2 to C30 alkenyl group, a substituted or unsubstituted C2 to C30 alkenyloxy group, a substituted or unsubstituted C2 to C30 alkynyl group, and a substituted or unsubstituted C2 to C30 alkynyloxy group.

**9.** The optical film of claim 8, wherein a mole ratio of the structural unit represented by Chemical Formula 1A to the structural unit represented by Chemical Formula 1B is 1:9 to 9:1, preferably wherein a mole ratio of the structural unit represented by Chemical Formula 1A to the structural unit represented by Chemical Formula 1B is 2:8 to 5:5.

**10.** The optical film of claim 8 or 9, wherein the polysiloxane further comprises a structural unit represented by Chemical Formula 1C:

Chemical Formula 1C

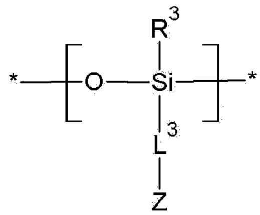

wherein, in Chemical Formula 1C,

$R^3$ is selected from hydrogen, a substituted or unsubstituted C1 to C30 alkyl group, a substituted or unsubstituted C6 to C30 aryl group, and a combination thereof,
$L^3$ is selected from a single bond, a substituted or unsubstituted C1 to C10 alkylene group, a substituted or unsubstituted C2 to C10 alkenylene group, a substituted or unsubstituted C2 to C10 alkynylene group, and a combination thereof, and
Z is a substituted or unsubstituted C1 to C30 alkyl group or a substituted or unsubstituted C1 to C30 alkoxy group, preferably wherein the structural unit represented by Chemical Formula 1C is present between the structural unit represented by Chemical Formula 1A and the structural unit represented by Chemical Formula 1B.

**11.** The optical film of any of claims 8 to 10, wherein the liquid crystal comprises at least one of a first liquid crystal represented by Chemical Formula 2A, a second liquid crystal represented by Chemical Formula 2B, and a third liquid crystal represented by Chemical Formula 2C:

Chemical Formula 2A

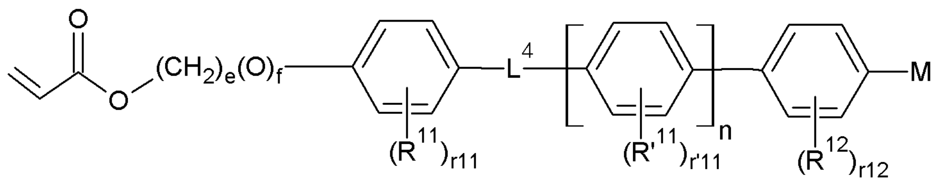

Chemical Formula 2B

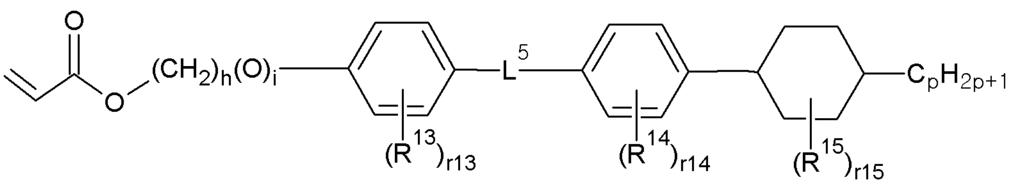

Chemical Formula 2C

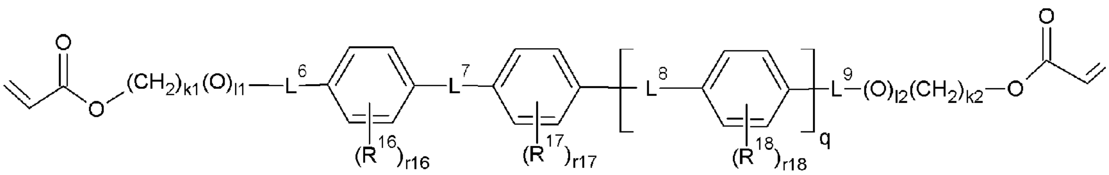

wherein, in Chemical Formulae 2A to 2C,

M is selected from a cyano group, a cyano-containing group, a hydroxy group, a substituted or unsubstituted carboxylic acid group, and a combination thereof,

$R^{11}$, $R'^{11}$, and $R^{12}$ to $R^{18}$ are independently selected from a substituted or unsubstituted C1 to C10 alkyl group, a substituted or unsubstituted C1 to C10 alkoxy group, a halogen atom, a halogen-containing group, and a combination thereof,
$r_{11}$, $r'_{11}$, $r_{12}$, $r_{13}$, $r_{14}$, $r_{16}$, $r_{17}$, and $r_{18}$ are independently an integer from 0 to 4,
$r_{15}$ is an integer from 0 to 8,
$L^4$ to $L^9$ are independently selected from a single bond, -C(=O)O-, - OC(=O)-, a C3 to C10 alkylene group, and a C3 to C10 alkylene group further comprising -C(=O)O- or -OC(=O)-,
e, h, p, $k_1$, and $k_2$ are independently an integer of 1 to 10, and
n, f, i, $l_1$, $l_2$, and q are independently 0 or 1, preferably wherein the liquid crystal comprises the first liquid crystal, the second liquid crystal, and the third liquid crystal, and wherein
an amount of the first liquid crystal in the liquid crystal is 10 percent by weight to 35 percent by weight based on the total amount of the liquid crystal,
an amount of the second liquid crystal in the liquid crystal is 10 percent by weight to 35 percent by weight based on the total amount of the liquid crystal, and
an amount of the third liquid crystal in the liquid crystal is 30 percent by weight to 80 weight based on the total amount of the liquid crystal.

**12.** The optical film of any of claims 8 to 11, wherein $n_z$ of liquid crystal layer satisfies $0 < n_z < 1$, wherein $n_z$ is a refractive index in a direction perpendicular to a slow axis and a fast axis of the liquid crystal layer, and/or wherein the liquid crystal layer satisfies Relationship Equation 1:

Relationship Equation 1

$$n_x > n_z > n_y$$

wherein, in Relationship Equation 1,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer, and/or wherein the liquid crystal layer satisfies Relationship Equation 2:

Relationship Equation 2

$$0 < (n_x - n_z)/(n_x - n_y) < 1$$

wherein, in Relationship Equation 2,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer, and/or wherein the liquid crystal layer satisfies Relationship Equation 2a:

Relationship Equation 2a

$$0.3 \leq (n_x - n_z)/(n_x - n_y) < 0.95$$

wherein, in Relationship Equation 2a,

$n_x$ is a refractive index at a slow axis of the liquid crystal layer,
$n_y$ is a refractive index at a fast axis of the liquid crystal layer, and
$n_z$ is a refractive index in a direction perpendicular to the fast axis and the slow axis of the liquid crystal layer.

**13.** The optical film of any of claims 8 to 12, wherein the polysiloxane is present in a position adjacent to the surface of

the liquid crystal layer, and/or wherein the liquid crystal has an optical axis arranged to be tilted with respect to the surface of the liquid crystal layer.

**14.** The optical film of any of claims 8 to 13,
wherein the liquid crystal layer comprises a first surface and a second surface facing the first surface, and wherein tilt angles of the liquid crystals become gradually larger from the first surface to the second surface, preferably wherein the tilt angles of the liquid crystals at the second surface range from 30° to 75°, and/or wherein the tilt angles of the liquid crystals at the first surface range from greater than 0° to less than or equal to 5°, and/or wherein the liquid crystal layer further comprises an alignment layer contacting the first surface.

**15.** An antireflective film, comprising:

the optical film according to any of claims 8 to 14, and
a polarizer disposed on one surface of the optical film.

**16.** A display device comprising:

a display panel, and
the optical film of any of claims claim 8 to 14, or
the antireflective film of claim 15.

**Patentansprüche**

**1.** Zusammensetzung für eine optische Folie, beinhaltend:

einen Flüssigkristall; und
ein Polysiloxan, beinhaltend eine Struktureinheit, dargestellt durch die chemische Formel 1A, und eine Struktureinheit, dargestellt durch die chemische Formel 1B:

Chemische Formel 1A

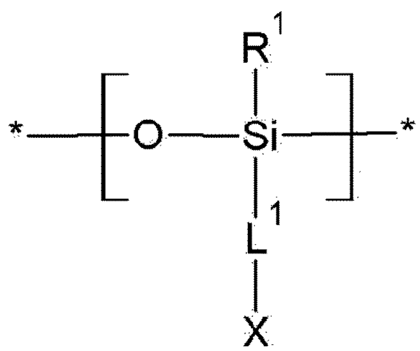

Chemische Formel 1B

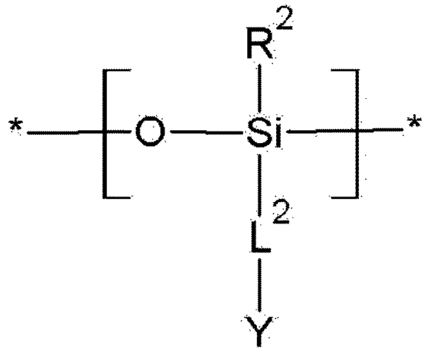

wobei in den chemischen Formeln 1A und 1B

$R^1$ und $R^2$ unabhängig ausgewählt sind aus Wasserstoff, einer substituierten oder nicht substituierten C1- bis C30-Alkylgruppe, einer substituierten C6- bis C30-Arylgruppe und einer Kombination davon,
$L^1$ und $L^2$ unabhängig ausgewählt sind aus einer einfachen Verbindung, einer substituierten oder nicht substituierten C1- bis C10-Alkylengruppe, einer substituierten oder nicht substituierten C2-bis C10-Alkenylengruppe, einer substituierten oder nicht substituierten C2- bis C10-Alkynylengruppe und einer Kombination davon,
X ausgewählt ist aus einer substituierten oder nicht substituierten C6- bis C30-Arylgruppe und einer substituierten oder nicht substituierten C3- bis C30-Heteroarylgruppe und
Y ausgewählt ist aus einer substituierten oder nicht substituierten Acryloxygruppe, einer substituierten oder nicht substituierten Methacryloxygruppe, einer substituierten oder nicht substituierten Acryloylgruppe, einer substituierten oder nicht substituierten Methacryloylgruppe, einer substituierten oder nicht substituierten C2- bis C30-Alkenylgruppe, einer substituierten oder nicht substituierten C2- bis C30-Alkenyloxygruppe, einer substituierten oder nicht substituierten C2- bis C30-Alkynylgruppe und einer substituierten oder nicht substituierten C2- bis C30-Alkynyloxygruppe.

**2.** Zusammensetzung gemäß Anspruch 1, wobei ein Molverhältnis der Struktureinheit, dargestellt durch die chemische Formel 1A, zur Struktureinheit, dargestellt durch die chemische Formel 1B 1:9 zu 9:1 ist, wobei bevorzugt ein Molverhältnis der Struktureinheit, dargestellt durch die chemische Formel 1A, zur Struktureinheit, dargestellt durch die chemische Formel 1B 2:8 zu 5:5 ist.

**3.** Zusammensetzung gemäß Anspruch 1 oder 2, wobei das Polysiloxan ferner eine Struktureinheit beinhaltet, dargestellt durch die chemische Formel 1C:

Chemische Formel 1C

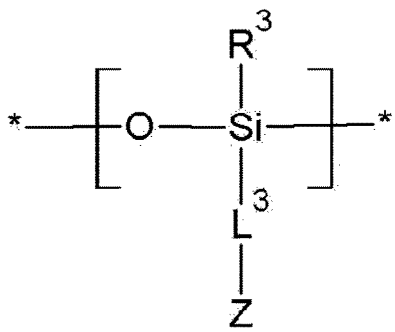

wobei in der chemischen Formel 1C

$R^3$ ausgewählt ist aus Wasserstoff, einer substituierten oder nicht substituierten C1- bis C30-Alkylgruppe, einer substituierten C6- bis C30-Arylgruppe und einer Kombination davon, $L^3$ ausgewählt ist aus einer einfachen

Verbindung, einer substituierten oder nicht substituierten C1- bis C10-Alkylengruppe, einer substituierten oder nicht substituierten C2- bis C10-Alkenylengruppe, einer substituierten oder nicht substituierten C2- bis C10-Alkynylengruppe und einer Kombination davon und

Z eine substituierte oder nicht substituierte C1- bis C30-Alkylgruppe oder eine substituierte oder nicht substituierte C1- bis C30-Alkoxygruppe ist, wobei bevorzugt die Struktureinheit, dargestellt durch die chemische Formel 1C, zwischen der Struktureinheit, dargestellt durch die chemische Formel 1A, und der Struktureinheit, dargestellt durch die chemische Formel 1B, vorliegt.

**4.** Zusammensetzung gemäß einem der Ansprüche 1 bis 3, wobei eine Menge des Polysiloxans 0,001 bis 5 Gewichtsprozent basierend auf der Gesamtmenge der Zusammensetzung für eine optische Folie beträgt.

**5.** Zusammensetzung gemäß einem der Ansprüche 1 bis 4, wobei das Polysiloxan ein Gewichtsmittel des Molekülgewichts von 1000 Daltons bis 30000 Daltons aufweist.

**6.** Zusammensetzung gemäß einem der Ansprüche 1 bis 5, wobei der Flüssigkristall mindestens einen eines ersten Flüssigkristalls, dargestellt durch die chemische Formel 2A, eines zweiten Flüssigkristalls, dargestellt durch die chemische Formel 2B, und eines dritten Flüssigkristalls, dargestellt durch die chemische Formel 2C, beinhaltet:

Chemische Formel 2A

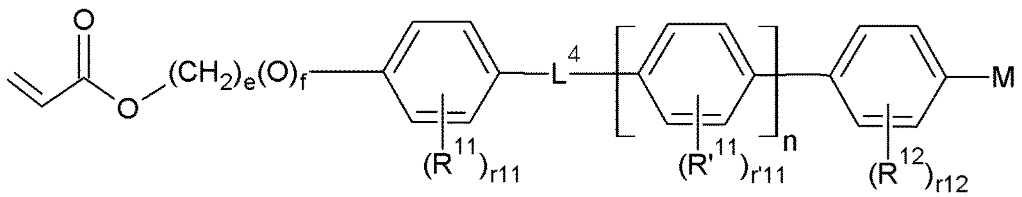

Chemische Formel 2B

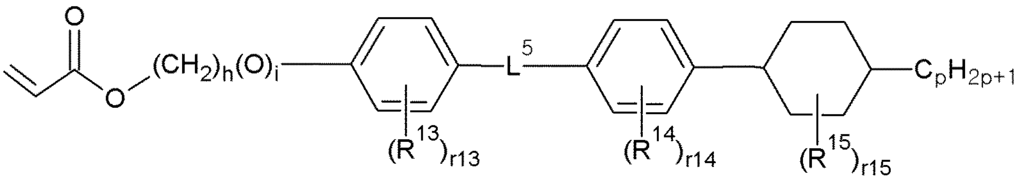

Chemische Formel 2C

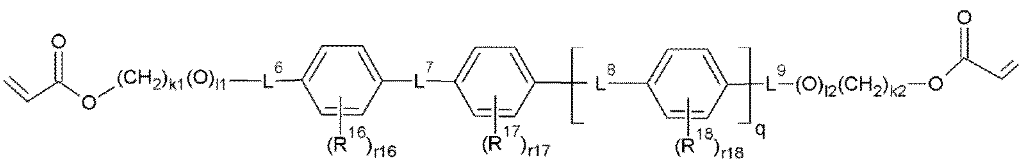

wobei in den chemischen Formeln 2A bis 2C

M ausgewählt ist aus einer Cyanogruppe, einer Cyano enthaltenden Gruppe, einer Hydroxygruppe, einer substituierten oder nicht substituierten Carbonsäuregruppe und einer Kombination davon,

$R^{11}$, $R'^{11}$ und $R^{12}$ bis $R^{18}$ unabhängig ausgewählt sind aus einer substituierten oder nicht substituierten C1- bis C10-Alkylgruppe, einer substituierten C1- bis C10-Alkoxygruppe, einem Halogenatom, einer Halogen enthaltenden Gruppe und einer Kombination davon, $r_{11}$, $r'_{11}$, $r_{12}$ $r_{13}$, $r_{14}$, $r_{16}$, $r_{17}$ und $r_{18}$ unabhängig eine ganze Zahl von 0 bis 4 sind,

$r_{15}$ eine ganze Zahl von 0 bis 8 ist,

$L^4$ und $L^9$ unabhängig ausgewählt sind aus einer einfachen Verbindung, -C(=O)O-, -OC(=O)-, einer C3- bis C10 Alkylengruppe und einer C3- bis C10-Alkylengruppe, ferner beinhaltend -C(=O)O- oder -OC(=O)-,

e, h, p, $k_1$ und $k_2$ unabhängig eine ganze Zahl von 1 bis 10 sind und

n, f, i, $l_1$ $l_2$ und q unabhängig 0 oder 1 sind, wobei bevorzugt der Flüssigkristall einen ersten Flüssigkristall, einen

zweiten Flüssigkristall und einen dritten Flüssigkristall beinhaltet und wobei eine Menge des ersten Flüssigkristalls im Flüssigkristall 10 Gewichtsprozent bis 35 Gewichtsprozent basierend auf der Gesamtmenge des Flüssigkristalls beträgt,
eine Menge des zweiten Flüssigkristalls im Flüssigkristall 10 Gewichtsprozent bis 35 Gewichtsprozent basierend auf der Gesamtmenge des Flüssigkristalls beträgt und
eine Menge des dritten Flüssigkristalls im Flüssigkristall 30 Gewichtsprozent bis 80 Gewichtsprozent basierend auf der Gesamtmenge des Flüssigkristalls beträgt.

**7.** Zusammensetzung gemäß einem der Ansprüche 1 bis 6, wobei die Zusammensetzung für eine optische Folie ferner ein Lösungsmittel beinhaltet und wobei die Zusammensetzung Folgendes beinhaltet:

10 Gewichtsprozent bis 30 Gewichtsprozent des Flüssigkristalls,
0,001 Gewichtsprozent bis 5 Gewichtsprozent des Polysiloxans und
eine Restmenge des Lösungsmittels basierend auf der Gesamtmenge der Zusammensetzung für eine optische Folie.

**8.** Optische Folie, die eine Flüssigkristallschicht beinhaltet, die Folgendes beinhaltet:

einen Flüssigkristall; und
ein Polysiloxan, beinhaltend eine Struktureinheit, dargestellt durch die chemische Formel 1A, und eine Struktureinheit, dargestellt durch die chemische Formel 1B:

Chemische Formel 1A

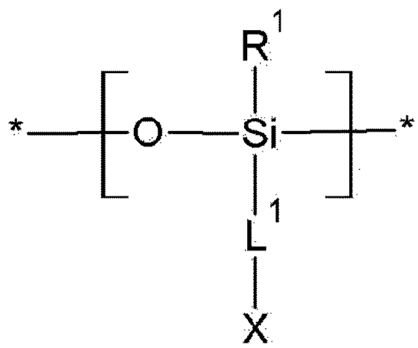

Chemische Formel 1B

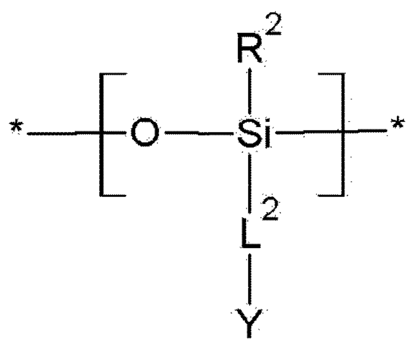

wobei in den chemischen Formeln 1A und 1B

$R^1$ und $R^2$ unabhängig ausgewählt sind aus Wasserstoff, einer substituierten oder nicht substituierten C1- bis C30-Alkylgruppe, einer substituierten C6- bis C30-Arylgruppe und einer Kombination davon,
$L^1$ und $L^2$ unabhängig ausgewählt sind aus einer einfachen Verbindung, einer substituierten oder nicht

substituierten C1- bis C10-Alkylengruppe, einer substituierten oder nicht substituierten C2-bis C10-Alkenylengruppe, einer substituierten oder nicht substituierten C2- bis C10-Alkynylengruppe und einer Kombination davon,
X ausgewählt ist aus einer substituierten oder nicht substituierten C6- bis C30-Arylgruppe und einer substituierten oder nicht substituierten C3- bis C30-Heteroarylgruppe und
Y ausgewählt ist aus einer substituierten oder nicht substituierten Acryloxygruppe, einer substituierten oder nicht substituierten Methacryloxygruppe, einer substituierten oder nicht substituierten Acryloylgruppe, einer substituierten oder nicht substituierten Methacryloylgruppe, einer substituierten oder nicht substituierten C2- bis C30-Alkenylgruppe, einer substituierten oder nicht substituierten C2- bis C30-Alkenyloxygruppe, einer substituierten oder nicht substituierten C2- bis C30-Alkynylgruppe und einer substituierten oder nicht substituierten C2- bis C30-Alkynyloxygruppe.

**9.** Optische Folie gemäß Anspruch 8, wobei ein Molverhältnis der Struktureinheit, dargestellt durch die chemische Formel 1A, zur Struktureinheit, dargestellt durch die chemische Formel 1B 1 : 9 zu 9 : 1 ist, wobei bevorzugt ein Molverhältnis der Struktureinheit, dargestellt durch die chemische Formel 1A, zur Struktureinheit, dargestellt durch die chemische Formel 1B 2 : 8 zu 5 : 5 ist.

**10.** Optische Folie gemäß Anspruch 8 oder 9, wobei das Polysiloxan ferner eine Struktureinheit beinhaltet, dargestellt durch die chemische Formel 1C:

Chemische Formel 1C

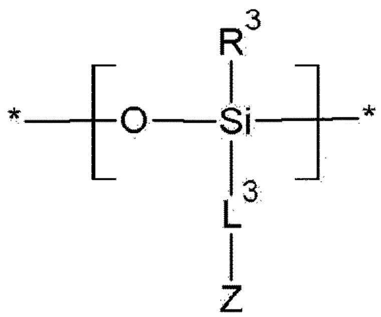

wobei in der chemischen Formel 1C

$R^3$ ausgewählt ist aus Wasserstoff, einer substituierten oder nicht substituierten C1- bis C30-Alkylgruppe, einer substituierten C6- bis C30-Arylgruppe und einer Kombination davon, $L^3$ ausgewählt ist aus einer einfachen Verbindung, einer substituierten oder nicht substituierten C1- bis C10-Alkylengruppe, einer substituierten oder nicht substituierten C2- bis C10-Alkenylengruppe, einer substituierten oder nicht substituierten C2- bis C10-Alkynylengruppe und einer Kombination davon und
Z eine substituierte oder nicht substituierte C1- bis C30-Alkylgruppe oder eine substituierte oder nicht substituierte C1- bis C30-Alkoxygruppe ist, wobei bevorzugt die Struktureinheit, dargestellt durch die chemische Formel 1C, zwischen der Struktureinheit, dargestellt durch die chemische Formel 1A, und der Struktureinheit, dargestellt durch die chemische Formel 1B, vorliegt.

**11.** Optische Folie gemäß einem der Ansprüche 8 bis 10, wobei der Flüssigkristall mindestens einen eines ersten Flüssigkristalls, dargestellt durch die chemische Formel 2A, eines zweiten Flüssigkristalls, dargestellt durch die chemische Formel 2B, und eines dritten Flüssigkristalls, dargestellt durch die chemische Formel 2C, beinhaltet:

Chemische Formel 2A

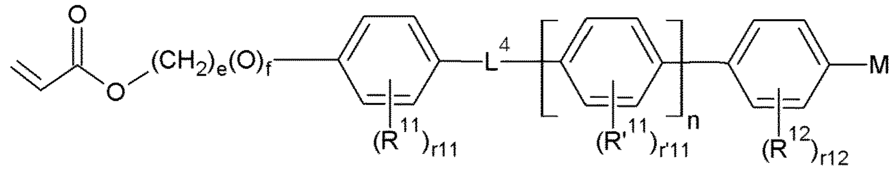

Chemische Formel 2B

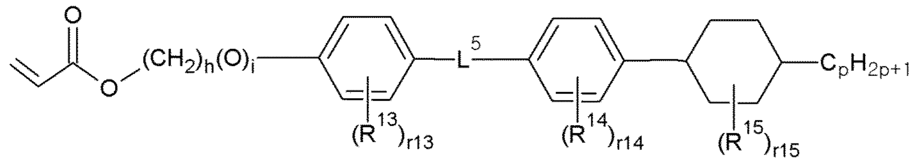

Chemische Formel 2C

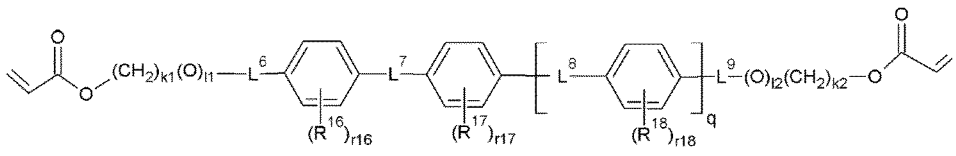

wobei in den chemischen Formeln 2A bis 2C

M ausgewählt ist aus einer Cyanogruppe, einer Cyano enthaltenden Gruppe, einer Hydroxygruppe, einer substituierten oder nicht substituierten Carbonsäuregruppe und einer Kombination davon,
$R^{11}$, $R'^{11}$ und $R^{12}$ bis $R^{18}$ unabhängig ausgewählt sind aus einer substituierten oder nicht substituierten C1- bis C10-Alkylgruppe, einer substituierten C1- bis C10-Alkoxygruppe, einem Halogenatom, einer Halogen enthaltenden Gruppe und einer Kombination davon, $r_{11}$, $r'_{11}$, $r_{12}$, $r_{13}$, $r_{14}$, $r_{16}$, $r_{17}$ und $r_{18}$ unabhängig eine ganze Zahl von 0 bis 4 sind,
$r_{15}$ eine ganze Zahl von 0 bis 8 ist,
$L^4$ und $L^9$ unabhängig ausgewählt sind aus einer einfachen Verbindung, -C(=O)O-, - OC(=O)-, einer C3- bis C10 Alkylengruppe und einer C3- bis C10-Alkylengruppe, ferner beinhaltend -C(=O)O- oder -OC(=O)-,
e, h, p, $k_1$ und $k_2$ unabhängig eine ganze Zahl von 1 bis 10 sind und
n, f, i, $l_1$ $l_2$ und q unabhängig 0 oder 1 sind, wobei bevorzugt der Flüssigkristall den ersten Flüssigkristall, den zweiten Flüssigkristall und den dritten Flüssigkristall beinhaltet und wobei eine Menge des ersten Flüssigkristalls im Flüssigkristall 10 Gewichtsprozent bis 35 Gewichtsprozent basierend auf der Gesamtmenge des Flüssigkristalls beträgt,
eine Menge des zweiten Flüssigkristalls im Flüssigkristall 10 Gewichtsprozent bis 35 Gewichtsprozent basierend auf der Gesamtmenge des Flüssigkristalls beträgt und
eine Menge des dritten Flüssigkristalls im Flüssigkristall 30 Gewichtsprozent bis 80 Gewichtsprozent basierend auf der Gesamtmenge des Flüssigkristalls beträgt.

**12.** Optische Folie gemäß einem der Ansprüche 8 bis 11, wobei $n_z$ der Flüssigkristallschicht $0 < n_z < 1$ erfüllt, wobei $n_z$ ein Brechungsindex in einer Richtung senkrecht zu einer langsamen Achse und einer schnellen Achse der Flüssigkristallschicht ist und/oder wobei die Flüssigkristallschicht die Verhältnisgleichung 1 erfüllt:

Verhältnisgleichung 1

$$n_x > n_z > n_y$$

wobei in Verhältnisgleichung 1

$n_x$ ein Brechungsindex an einer langsamen Achse der Flüssigkristallschicht ist,
$n_y$ ein Brechungsindex an einer schnellen Achse der Flüssigkristallschicht ist und
$n_z$ ein Brechungsindex in einer Richtung senkrecht zur schnellen Achse und zur langsamen Achse der Flüssigkristallschicht ist und/oder wobei die Flüssigkristallschicht die Verhältnisgleichung 2 erfüllt:

Verhältnisgleichung 2

$$0 < (n_x - n_z)/(n_x . n_y) < 1$$

wobei in Verhältnisgleichung 2

$n_x$ ein Brechungsindex an einer langsamen Achse der Flüssigkristallschicht ist,
$n_y$ ein Brechungsindex an einer schnellen Achse der Flüssigkristallschicht ist und
$n_z$ ein Brechungsindex in einer Richtung senkrecht zur schnellen Achse und zur langsamen Achse der Flüssigkristallschicht ist und/oder wobei die Flüssigkristallschicht die Verhältnisgleichung 2a erfüllt:

Verhältnisgleichung 2a

$$0,3 \leq (n_x - n_z)/(n_x . n_y) < 0,95$$

wobei in Verhältnisgleichung 2a

$n_x$ ein Brechungsindex an einer langsamen Achse der Flüssigkristallschicht ist,
$n_y$ ein Brechungsindex an einer schnellen Achse der Flüssigkristallschicht ist und
$n_z$ ein Brechungsindex in einer Richtung senkrecht zur schnellen Achse und zur langsamen Achse der Flüssigkristallschicht ist.

**13.** Optische Folie gemäß einem der Ansprüche 8 bis 12, wobei das Polysiloxan in einer Position neben der Oberfläche der Flüssigkristallschicht vorliegt und/oder wobei das Flüssigkristall eine optische Achse aufweist, die eingerichtet ist, um in Bezug auf die Oberfläche der Flüssigkristallschicht geneigt zu sein.

**14.** Optische Folie gemäß einem der Ansprüche 8 bis 13,
wobei die Flüssigkristallschicht eine erste Oberfläche und eine zweite Oberfläche, die der ersten Oberfläche zugewandt ist, beinhaltet und
wobei die Neigungswinkel der Flüssigkristalle von der ersten Oberfläche zur zweiten Oberfläche allmählich größer werden, wobei bevorzugt die Neigungswinkel der Flüssigkristalle an der zweiten Oberfläche zwischen 30° und 75° liegen und/oder wobei die Neigungswinkel der Flüssigkristalle an der ersten Oberfläche zwischen größer als 0° bis kleiner als oder gleich 5° liegen und/oder wobei die Flüssigkristallschicht ferner eine Ausrichtungsschicht beinhaltet, die mit der ersten Oberfläche in Kontakt ist.

**15.** Antireflexfolie, beinhaltend:

die optische Folie gemäß einem der Ansprüche 8 bis 14 und
einen auf einer Oberfläche der optischen Folie angeordneten Polarisator.

**16.** Anzeigevorrichtung, beinhaltend:

ein Anzeigefeld und
die optische Folie gemäß einem der Ansprüche Anspruch 8 bis 14 oder
die Antireflexfolie gemäß Anspruch 15.

## Revendications

**1.** Composition pour film optique comprenant :

un cristal liquide, et
un polysiloxane comprenant un motif structurel représenté par la formule chimique 1A et un motif structurel représenté par la formule chimique 1B :

Formule chimique 1A

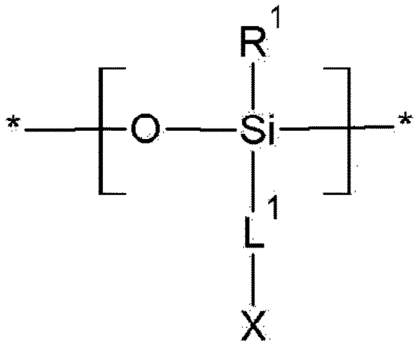

Formule chimique 1B

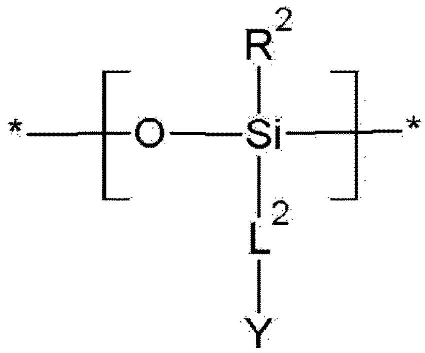

dans lequel, dans les formules chimiques 1A et 1B,

$R^1$ et $R^2$ sont chacun indépendamment choisis parmi un atome d'hydrogène, un groupe alkyle en C1 à C30 substitué ou non substitué, un groupe aryle en C6 à C30 substitué ou non substitué, et une combinaison de ceux-ci,
$L^1$ et $L^2$ sont chacun indépendamment choisis parmi une liaison simple, un groupe alkylène en C1 à C10 substitué ou non substitué, un groupe alcénylène en C2 à C10 substitué ou non substitué, un groupe alcynylène en C2 à C10 substitué ou non substitué, et une combinaison de ceux-ci,
X est choisi parmi un groupe aryle en C6 à C30 substitué ou non substitué, un groupe hétéroaryle en C3 à C30 substitué ou non substitué, et
Y est choisi parmi un groupe acryloxy substitué ou non substitué, un groupe méthacryloxy substitué ou non substitué, un groupe acryloyle substitué ou non substitué, un groupe méthacryloyle substitué ou non substitué, un groupe alcényle en C2 à C30 substitué ou non substitué, un groupe alcényloxy en C2 à C30 substitué ou non substitué, un groupe alcynyle en C2 à C30 substitué ou non substitué, et un groupe alcynyloxy en C2 à C30 substitué ou non substitué.

**2.** Composition selon la revendication 1, le rapport molaire du motif structurel représenté par la formule chimique 1A sur le motif structurel représenté par la formule chimique 1B valant 1:9 à 9:1, de préférence le rapport molaire du motif structurel représenté par la formule chimique 1A sur le motif structurel représenté par la formule chimique 1B valant 2:8 à 5:5.

3. Composition selon la revendication 1 ou 2, ledit polysiloxane comprenant en outre un motif structurel représenté par la formule chimique 1C :

Formule chimique 1C

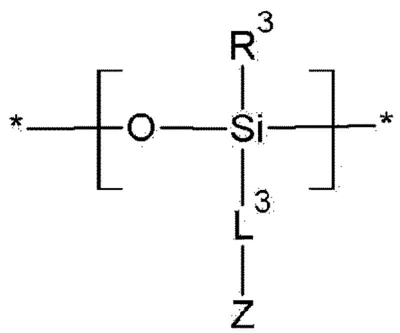

dans lequel, dans la formule chimique 1C,

$R^3$ est choisi parmi un atome d'hydrogène, un groupe alkyle en C1 à C30 substitué ou non substitué, un groupe aryle en C6 à C30 substitué ou non substitué, et une combinaison de ceux-ci,
$L^3$ est choisi parmi une liaison simple, un groupe alkylène en C1 à C10 substitué ou non substitué, un groupe alcénylène en C2 à C10 substitué ou non substitué, un groupe alcynylène en C2 à C10 substitué ou non substitué, et une combinaison de ceux-ci, et
Z représente un groupe alkyle en C1 à C30 substitué ou non substitué ou un groupe alcoxy en C1 à C30 substitué ou non substitué, de préférence ledit motif structurel représenté par la formule chimique 1C étant présent entre le motif structurel représenté par la formule chimique 1A et le motif structurel représenté par la formule chimique 1B.

4. Composition selon l'une quelconque des revendications 1 à 3, la quantité du polysiloxane représentant 0,001 à 5 pour cent en poids par rapport à la quantité totale de la composition pour film optique.

5. Composition selon l'une quelconque des revendications 1 à 4, ledit polysiloxane ayant un poids moléculaire moyen en poids de 1000 Daltons à 30000 Daltons.

6. Composition selon l'une quelconque des revendications 1 à 5, ledit cristal liquide comprenant au moins un premier cristal liquide représenté par la formule chimique 2A, un deuxième cristal liquide représenté par la formule chimique 2B et un troisième cristal liquide représenté par la formule chimique 2C :

Formule chimique 2A

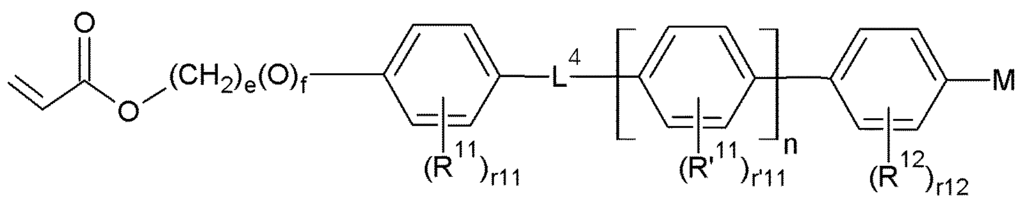

Formule chimique 2B

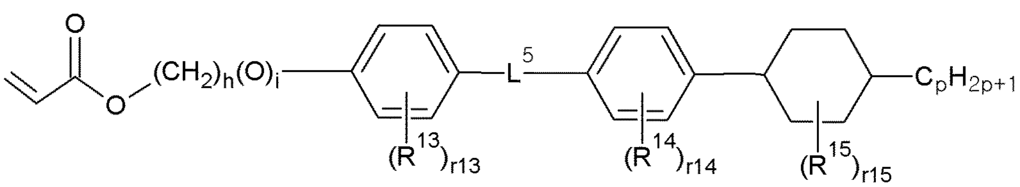

Formule chimique 2C

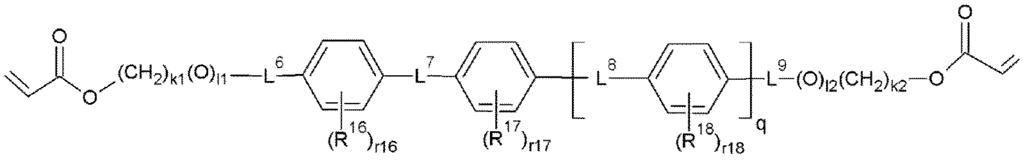

dans lequel, dans les formules chimiques 2A à 2C,

M est choisi parmi un groupe cyano, un groupe contenant un groupe cyano, un groupe hydroxy, un groupe acide carboxylique substitué ou non substitué, et une combinaison de ceux-ci,
$R^{11}$, $R'^{11}$, et $R^{12}$ à $R^{18}$ sont indépendamment choisis parmi un groupe alkyle en C1 à C10 substitué ou non substitué, un groupe alcoxy en C1 à C10 substitué ou non substitué, un atome d'halogène, un groupe contenant un atome d'halogène, et une combinaison de ceux-ci,
$r_{11}$, $r'_{11}$, $r_{12}$, $r_{13}$, $r_{14}$, $r_{16}$, $r_{17}$ et $r_{18}$ représentent indépendamment un entier valant de 0 à 4,
$r_{15}$ représente un entier valant de 0 à 8,
$L^4$ à $L^9$ sont indépendamment choisis parmi une liaison simple, -C(=O)O-, -OC(=O)-, un groupe alkylène en C3 à C10, et un groupe alkylène en C3 à C10 comprenant en outre -C(=O)O- ou -OC(=O)-,
e, h, p, $k_1$ et $k_2$ représentent indépendamment un entier valant 1 à 10, et
n, f, i, $l_1$ $l_2$, et q valent indépendamment 0 ou 1, de préférence ledit cristal liquide comprenant un premier cristal liquide, un deuxième cristal liquide et un troisième cristal liquide, et
la quantité du premier cristal liquide dans le cristal liquide représentant 10 pour cent en poids à 35 pour cent en poids par rapport à la quantité totale du cristal liquide,
la quantité du deuxième cristal liquide dans le cristal liquide représentant 10 pour cent en poids à 35 pour cent en poids par rapport à la quantité totale du cristal liquide, et
la quantité du troisième cristal liquide dans le cristal liquide représentant 30 pour cent en poids à 80 pour cent en poids par rapport à la quantité totale du cristal liquide.

**7.** Composition selon l'une quelconque des revendications 1 à 6, ladite composition pour film optique comprenant en outre un solvant, et ladite composition comprenant :

10 pour cent en poids à 30 pour cent en poids du cristal liquide,
0,001 pour cent en poids à 5 pour cent en poids du polysiloxane, et
la quantité restante du solvant par rapport à la quantité totale de la composition pour film optique.

**8.** Film optique comprenant une couche de cristal liquide comprenant :

un cristal liquide, et
un polysiloxane comprenant un motif structurel représenté par la formule chimique 1A et un motif structurel représenté par la formule chimique 1B :

Formule chimique 1A

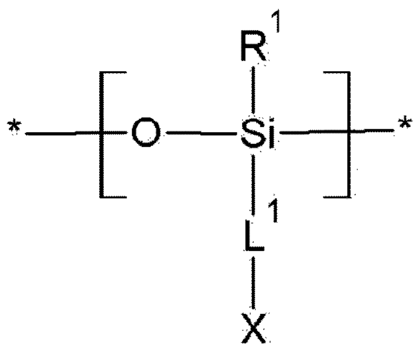

Formule chimique 1B

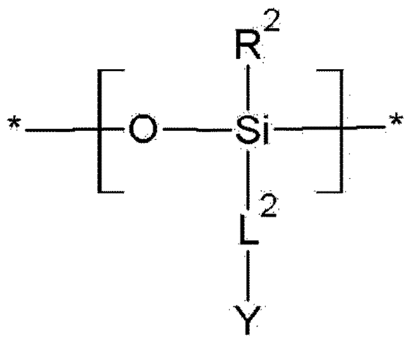

dans lequel, dans les formules chimiques 1A et 1B,

$R^1$ et $R^2$ sont chacun indépendamment choisis parmi un atome d'hydrogène, un groupe alkyle en C1 à C30 substitué ou non substitué, un groupe aryle en C6 à C30 substitué ou non substitué, et une combinaison de ceux-ci,
$L^1$ et $L^2$ sont chacun indépendamment choisis parmi une liaison simple, un groupe alkylène en C1 à C10 substitué ou non substitué, un groupe alcénylène en C2 à C10 substitué ou non substitué, un groupe alcynylène en C2 à C10 substitué ou non substitué, et une combinaison de ceux-ci,
X est choisi parmi un groupe aryle en C6 à C30 substitué ou non substitué, et un groupe hétéroaryle en C3 à C30 substitué ou non substitué, et
Y est choisi parmi un groupe acryloxy substitué ou non substitué, un groupe méthacryloxy substitué ou non substitué, un groupe acryloyle substitué ou non substitué, un groupe méthacryloyle substitué ou non substitué, un groupe alcényle en C2 à C30 substitué ou non substitué, un groupe alcényloxy en C2 à C30 substitué ou non substitué, un groupe alcynyle en C2 à C30 substitué ou non substitué, et un groupe alcynyloxy en C2 à C30 substitué ou non substitué.

**9.** Film optique selon la revendication 8, le rapport molaire du motif structurel représenté par la formule chimique 1A sur le motif structurel représenté par la formule chimique 1B valant 1:9 à 9:1, de préférence le rapport molaire du motif structurel représenté par la formule chimique 1A sur le motif structurel représenté par la formule chimique 1B valant 2:8 à 5:5.

**10.** Film optique selon la revendication 8 ou 9, ledit polysiloxane comprenant en outre un motif structurel représenté par la formule chimique 1C :

Formule chimique 1C

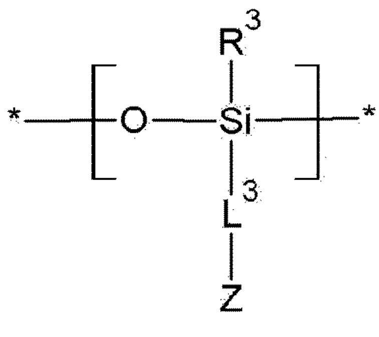

dans lequel, dans la formule chimique 1C,

$R^3$ est choisi parmi un atome d'hydrogène, un groupe alkyle en C1 à C30 substitué ou non substitué, un groupe aryle en C6 à C30 substitué ou non substitué, et une combinaison de ceux-ci,
$L^3$ est choisi parmi une liaison simple, un groupe alkylène en C1 à C10 substitué ou non substitué, un groupe alcénylène en C2 à C10 substitué ou non substitué, un groupe alcynylène en C2 à C10 substitué ou non substitué, et une combinaison de ceux-ci, et

Z représente un groupe alkyle en C1 à C30 substitué ou non substitué ou un groupe alcoxy en C1 à C30 substitué ou non substitué, de préférence ledit motif structurel représenté par la formule chimique 1C étant présent entre le motif structurel représenté par la formule chimique 1A et le motif structurel représenté par la formule chimique 1B.

**11.** Film optique selon l'une quelconque des revendications 8 à 10, ledit cristal liquide comprenant au moins un premier cristal liquide représenté par la formule chimique 2A, un deuxième cristal liquide représenté par la formule chimique 2B et un troisième cristal liquide représenté par la formule chimique 2C :

Formule chimique 2A

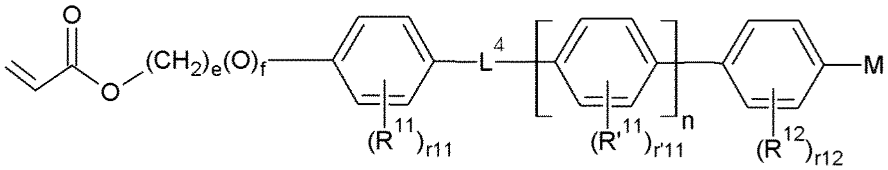

Formule chimique 2B

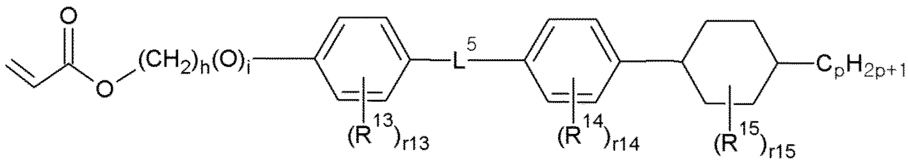

Formule chimique 2C

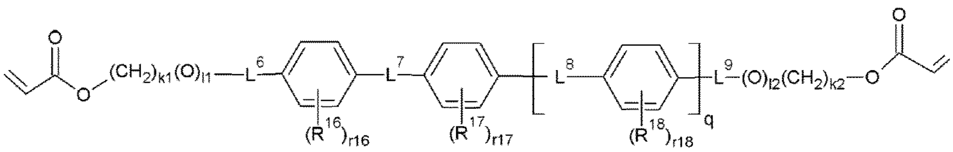

dans lequel, dans les formules chimiques 2A à 2C,

M est choisi parmi un groupe cyano, un groupe contenant un groupe cyano, un groupe hydroxy, un groupe acide carboxylique substitué ou non substitué, et une combinaison de ceux-ci,
$R^{11}$, $R'^{11}$, et $R^{12}$ à $R^{18}$ sont indépendamment choisis parmi un groupe alkyle en C1 à C10 substitué ou non substitué, un groupe alcoxy en C1 à C10 substitué ou non substitué, un atome d'halogène, un groupe contenant un atome d'halogène, et une combinaison de ceux-ci,
$r_{11}$, $r'_{11}$, $r_{12}$, $r_{13}$, $r_{14}$, $r_{16}$, $r_{17}$ et $r_{18}$ représentent indépendamment un entier valant de 0 à 4,
$r_{15}$ représente un entier valant de 0 à 8,
$L^4$ à $L^9$ sont indépendamment choisis parmi une liaison simple, -C(=O)O-, -OC(=O)-, un groupe alkylène en C3 à C10, et un groupe alkylène en C3 à C10 comprenant en outre -C(=O)O- ou -OC(=O)-,
e, h, p, $k_1$ et $k_2$ représentent indépendamment un entier valant 1 à 10, et
n, f, i, $l_1$ $l_2$, et q valent indépendamment 0 ou 1, de préférence ledit cristal liquide comprenant le premier cristal liquide, le deuxième cristal liquide et le troisième cristal liquide, et
la quantité du premier cristal liquide dans le cristal liquide représentant 10 pour cent en poids à 35 pour cent en poids par rapport à la quantité totale du cristal liquide,
la quantité du deuxième cristal liquide dans le cristal liquide représentant 10 pour cent en poids à 35 pour cent en poids par rapport à la quantité totale du cristal liquide, et
la quantité du troisième cristal liquide dans le cristal liquide représentant 30 pour cent en poids à 80 pour cent en poids par rapport à la quantité totale du cristal liquide.

**12.** Film optique selon l'une quelconque des revendications 8 à 11, $n_z$ de la couche de cristal liquide satisfaisant $0 < n_z < 1$, $n_z$ représentant l'indice de réfraction dans une direction perpendiculaire à un axe lent et à un axe rapide de la

couche de cristal liquide, et/ou ladite couche de cristal liquide satisfaisant l'équation de relation 1 :

Equation de relation 1

$$n_x > n_z > n_y$$

dans lequel, dans l'équation de relation 1,

$n_x$ représente un indice de réfraction au niveau d'un axe lent de la couche de cristal liquide,
$n_y$ représente un indice de réfraction au niveau d'un axe rapide de la couche de cristal liquide, et
$n_z$ représente un indice de réfraction dans une direction perpendiculaire à l'axe rapide et à l'axe lent de la couche de cristal liquide, et/ou ladite couche de cristal liquide satisfaisant l'équation de relation 2 :

Equation de relation 2

$$0 < (n_x - n_z)/(n_x - n_y) < 1$$

dans lequel, dans l'équation de relation 2,

$n_x$ représente un indice de réfraction au niveau d'un axe lent de la couche de cristal liquide,
$n_y$ représente un indice de réfraction au niveau d'un axe rapide de la couche de cristal liquide, et
$n_z$ représente un indice de réfraction dans une direction perpendiculaire à l'axe rapide et à l'axe lent de la couche de cristal liquide, et/ou ladite couche de cristal liquide satisfaisant l'équation de relation 2a :

Equation de relation 2a

$$0,3 \leq (n_x - n_z)/(n_x - n_y) < 0,95$$

dans lequel, dans l'équation de relation 2a,

$n_x$ représente un indice de réfraction au niveau d'un axe lent de la couche de cristal liquide, $n_y$ représente un indice de réfraction au niveau d'un axe rapide de la couche de cristal liquide, et
$n_z$ représente un indice de réfraction dans une direction perpendiculaire à l'axe rapide et à l'axe lent de la couche de cristal liquide.

**13.** Film optique selon l'une quelconque des revendications 8 à 12, ledit polysiloxane étant présent dans une position adjacente à la surface de la couche de cristal liquide, et/ou ledit cristal liquide ayant un axe optique agencé pour être incliné par rapport à la surface de la couche de cristal liquide.

**14.** Film optique selon l'une quelconque des revendications 8 à 13,
ladite couche de cristal liquide comprenant une première surface et une seconde surface faisant face à la première surface, et
lesdits angles d'inclinaison des cristaux liquides devenant progressivement plus grands en allant de la première surface à la seconde surface, de préférence lesdits angles d'inclinaison des cristaux liquides au niveau de la seconde surface allant de 30° à 75°, et/ou lesdits angles d'inclinaison des cristaux liquides au niveau de la première surface allant de plus de 0° à 5° ou moins, et/ou ladite couche de cristal liquide comprenant en outre une couche d'alignement en contact avec la première surface.

**15.** Film antireflet, comprenant :

le film optique selon l'une quelconque des revendications 8 à 14, et
un polariseur disposé sur une surface du film optique.

**16.** Dispositif d'affichage comprenant :

un panneau d'affichage, et
le film optique selon l'une quelconque des revendications 8 à 14, ou
le film antireflet selon la revendication 15.

FIG. 1

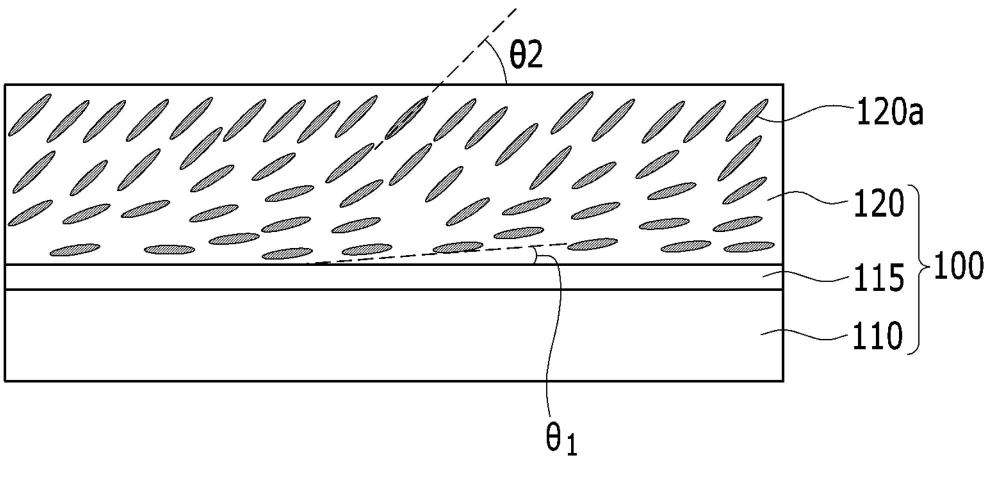

FIG. 2

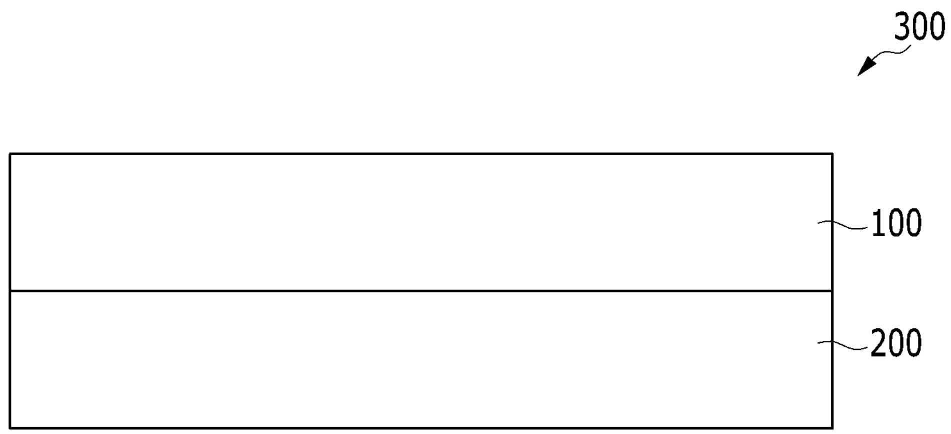

FIG. 3

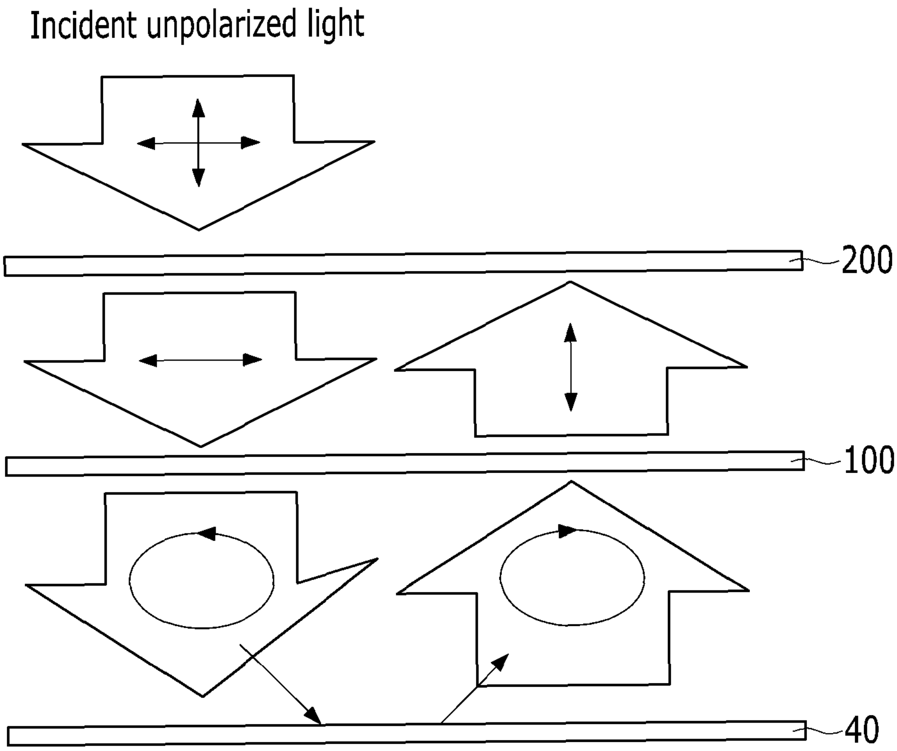

FIG. 4

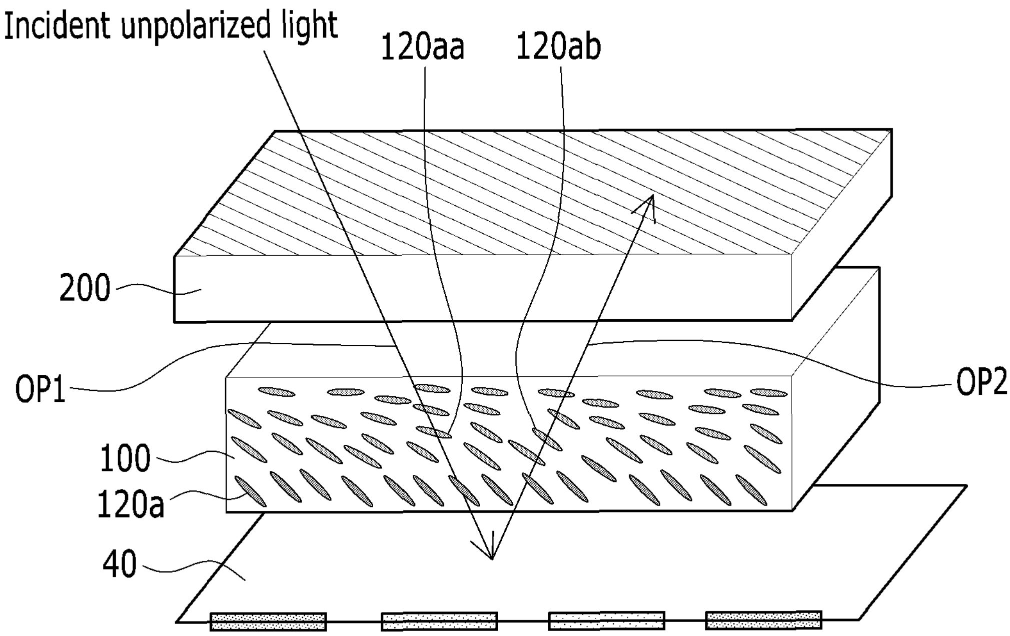
Incident unpolarized light
120aa
120ab
200
OP1
OP2
100
120a
40

FIG. 5

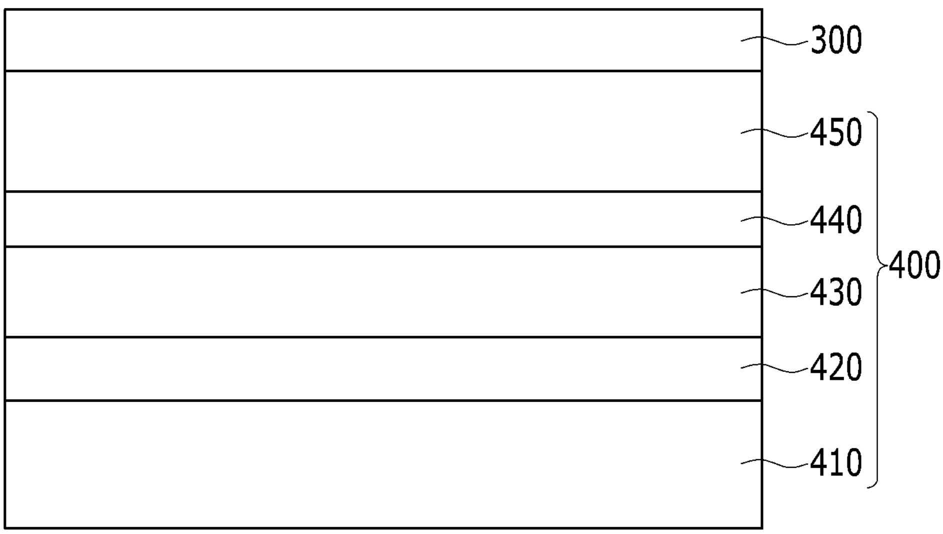

FIG. 6

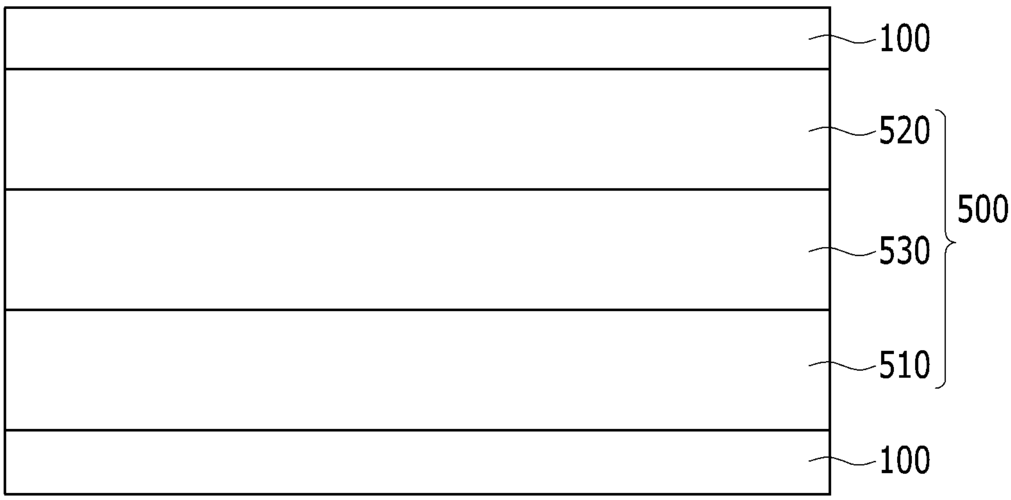

FIG. 7

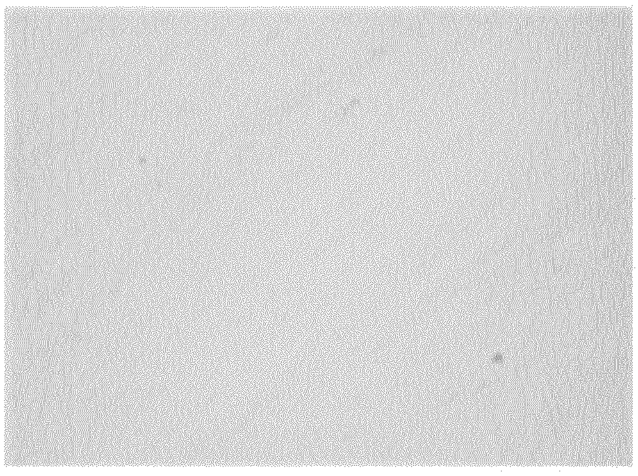

FIG. 8

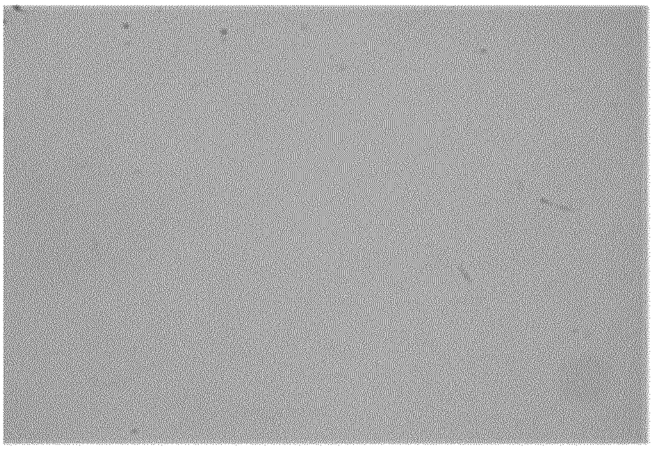

FIG. 9

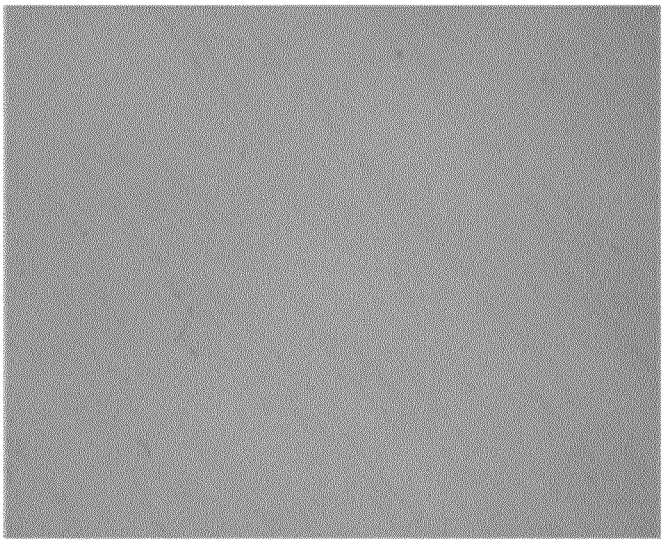

FIG. 10

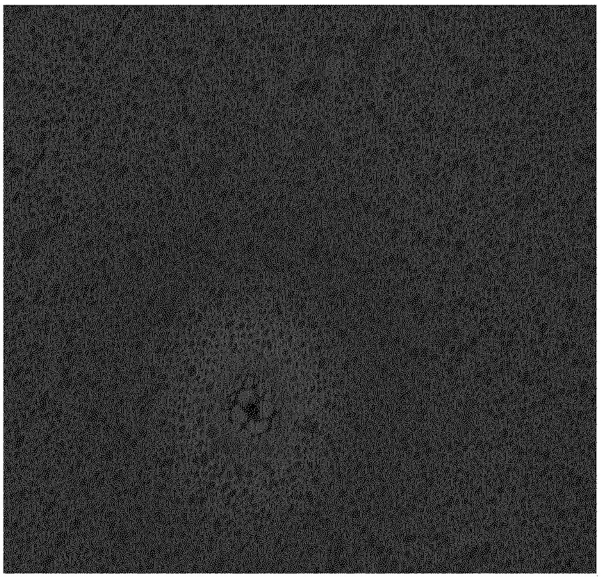

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015185385 A1, KOBAYASHI TADAHIRO
- JP 9165318H B
- EP 1962258 A1
- US 2004209007 A1, SATAKE MASAYUKI